# EUROPEAN PATENT APPLICATION

(11) **EP 3 690 805 A1**
(43) Date of publication of application: **05.08.2020**
(21) Application number: 18863034.7
(22) Date of filing: 11.09.2018
(51) Int. Cl.: G06T 7/00, G03B 15/00, G03B 35/08, H04N 5/225, H04N 5/232, H04N 13/243

(54) **SENSOR SYSTEM**

(30) Priority: 28.09.2017 JP 2017188548; 28.09.2017 JP 2017188549; 28.09.2017 JP 2017188550; 28.09.2017 JP 2017188551
(71) Applicant: Koito Manufacturing Co., Ltd., Tokyo 108-8711 (JP)
(72) Inventor: MITANI Kosuke, Shizuoka-shi Shizuoka 424-8764 (JP); NAMBA Takanori, Shizuoka-shi Shizuoka 424-8764 (JP); MANO Mitsuharu, Shizuoka-shi Shizuoka 424-8764 (JP)
(74) Representative: Cabinet Beau de Loménie
(86) International application number: PCT/JP2018/033647
(87) International publication number: WO 2019/065218

(57) **Abstract**

A first left camera unit (1025) is accommodated in a left lamp chamber and has a first angle of view (θ1). A second left camera unit (1026) is accommodated in the left lamp chamber and has a second angle of view (θ2) that is wider than the first angle of view (θ1). A first right camera unit (1035) is accommodated in a right lamp chamber and has a third angle of view (θ3). A second right camera unit (1036) is accommodated in the right lamp chamber and has a fourth angle of view (θ4) that is wider than the third angle of view (θ3). An image recognizer (1043) is configured to perform image recognition based on a left image that is selected one of a first left image acquired by the first left camera unit (1025) and a second left image acquired by the second left camera unit (1026), and based on a right image that is selected one of a first right image acquired by the first right camera unit (1035) and a second right image acquired by the second right camera unit (1036).

## Description

### Field

The presently disclosed subject matter relates to a sensor system adapted to be mounted on a vehicle. More specifically, the presently disclosed subject matter relates to a sensor system including a stereo camera system.

### Background

The stereo camera system includes a left camera unit and a right camera unit. The left camera unit and the right camera unit are respectively configured to capture images outside the vehicle. When an object is present in the field of view of both cameras, the distance to the object can be specified using triangulation based on the parallax of both cameras. In the stereo camera system described in PTL1, the left camera unit and the right camera unit are disposed in the vicinity of the room mirror in the vehicle cabin.

In order to realize the driving support technology of the vehicle, a sensor for detecting information in an outside area of the vehicle shall be mounted on the vehicle body. An example of such a sensor is the camera unit described in PTL2.

Four corner portions of the vehicle body (left front corner portion, right front corner portion, left rear corner portion, and right rear corner portion) have been considered as placement locations of camera units capable of efficiently acquire the information in the outside area of the vehicle. Each of these is a place where a lamp device for supplying illumination light to the outside of the vehicle is mounted. PTL3 discloses an example of such a lamp device. The lamp device includes a scanner that cyclically changes an irradiating direction of light emitted from a light source.

### Citation List

### Patent Literature

PTL1: Japanese Patent Publication No. 2013-112314 A
PTL2: Japanese Patent Publication No. 2017-094967 A
PTL3: International Publication WO 2012/144144 A

### Summary

### Technical Problem

A first object of the presently disclosed subject matter is to enhance the information acquisition capability of a sensor system including a stereo camera system.

A second object of the presently disclosed subject matter is to suppress degradation of the information acquisition capability of a sensor system including a stereo camera system.

A third object of the presently disclosed subject matter is to suppress degradation in the information acquisition capability of a sensor system including a camera unit used with a scanner that cyclically changes an irradiating direction of light emitted from a light source.

### Solution to Problem

In order to achieve the first object described above, a first illustrative aspect of the presently disclosed subject matter provides a sensor system adapted to be mounted on a vehicle, comprising:
a left lamp housing defining a part of a left lamp chamber accommodating a left lamp unit;
a right lamp housing defining a part of a right lamp chamber accommodating a right lamp unit;
a first left camera unit accommodated in the left lamp chamber and having a first angle of view;
a second left camera unit accommodated in the left lamp chamber and having a second angle of view that is wider than the first angle of view;
a first right camera unit accommodated in the right lamp chamber and having a third angle of view;
a second right camera unit accommodated in the right lamp chamber and having a fourth angle of view that is wider than the third angle of view; and
an image recognizer configured to perform image recognition based on a left image that is selected one of a first left image acquired by the first left camera unit and a second left image acquired by the second left camera unit, and based on a right image that is selected one of a first right image acquired by the first right camera unit and a second right image acquired by the second right camera unit.

The merit of configuring the stereo camera system with the first left camera unit accommodated in the left lamp chamber and the first right camera unit accommodated in the right lamp chamber is that a longer base line length (distance between the optical axes of both cameras) can be easily secured in comparison with a stereo camera system installed in the vicinity of the room mirror in the vehicle cabin. As a result, the distant visual recognition capability is enhanced. Further, since the stereo camera system is removed from the vicinity of the room mirror, the field of view of the driver is expanded.

However, although the distant visual recognition capability is enhanced by increasing the base line length, it is inevitable that the blind spot area in the closer range is widened. In the present aspect, in order to compensate for the blind spot area, it is employed the stereo camera system including the second left camera unit and the second right camera unit having the wider angle of view. As the angle of view increases, the distant visual recognition capability decreases. However, a wide visible area can be secured in the closer range to cover the blind spot area of the stereo camera system including the first left camera unit and the first right camera unit.

According to the above configuration, the image recognition performed by the image recognizer can be optimized by appropriately combining the image acquired by the first left camera unit and the first right camera unit having the relatively high distant visual recognition capability and the image acquired by the second left camera unit and the second right camera unit having the relatively high proximate visual recognition capability. Therefore, the information acquisition capability of the sensor system including the stereo camera system can be enhanced.

In this case, the left image and the right image may be selected based on the speed of the vehicle.

As the vehicle speed increases, it is required to reliably acquire information of a farther area. Conversely, as the vehicle speed decreases, it is required to reliably acquire information of a closer area. According to the above configuration, it is possible to accurately acquire the information of an increasingly demanded area in accordance with the vehicle speed.

In order to achieve the first object described above, a second illustrative aspect of the presently disclosed subject matter provides a sensor system adapted to be mounted on a vehicle, comprising:
a left lamp housing defining a part of a left lamp chamber accommodating a left lamp unit;
a right lamp housing defining a part of a right lamp chamber accommodating a right lamp unit;
a left camera unit accommodated in the left lamp chamber and having a first angle of view;
a right camera unit accommodated in the right lamp chamber and having a second angle of view that is different from the first angle of view; and
an image recognizer configured to perform image recognition based on at least one of a left image acquired by the left camera unit and a right image acquired by the right camera unit.

The merit of configuring the stereo camera system by the left camera unit accommodated in the left lamp chamber and the right camera unit accommodated in the right lamp chamber is that a longer base line length (distance between the optical axes of the two cameras) can be easily secured in comparison with the stereo camera system installed in the vicinity of the room mirror in the vehicle cabin. As a result, the distant visual recognition capability is enhanced. Further, since the stereo camera system is removed from the vicinity of the room mirror, the field of view of the driver is expanded.

However, when four camera units are required as in the sensor system according to the first aspect, there would be a case where the requirements relating to layout and cost are not satisfied. In the present aspect, a stereo camera system is established under a certain condition, and the system is switched to a monocular camera system as necessary. In this case, the information acquisition capability of the sensor system including the stereo camera system can be enhanced while satisfying the requirements related to layout and cost.

In this case, at least one of the left image and the right image may be selected based on the speed of the vehicle.

As the vehicle speed increases, it is required to reliably acquire information of a farther area. Conversely, as the vehicle speed decreases, it is required to reliably acquire information of a closer area. According to the above configuration, it is possible to accurately acquire the information of an increasingly demanded area in accordance with the vehicle speed.

In order to achieve the first object described above, a third illustrative aspect of the presently disclosed subject matter provides a sensor system adapted to be mounted on a vehicle, comprising:
a first camera unit having a first optical axis oriented in a first direction;
a second camera unit having a second optical axis oriented in a second direction that is different from the first direction; and
an image recognizer configured to perform image recognition based on at least one of a first image acquired by the first camera unit and a second image acquired by the second camera unit.

According to such a configuration, since the first optical axis of the first camera unit and the second optical axis of the second camera unit are oriented in different directions, the calculation processing related to the image recognition becomes more complicated than the rectified stereo camera system, but the image recognition by the stereo camera system can be performed over a wider angle range. Therefore, the information acquisition capability of the sensor system including the stereo camera system can be enhanced.

The sensor system according to the third illustrative aspect may be configured so as to further comprise a lamp housing defining a part of a lamp chamber accommodating a lamp unit. Here, at least one of the first camera unit and the second lamp unit is accommodated in the lamp chamber.

In this case, it is possible to make the configuration similar to the rectified stereo camera system, so that it is possible to suppress an increase in the load relating to the image recognition.

In order to achieve the first object described above, a fourth illustrative aspect of the presently disclosed subject matter provides a sensor system adapted to be mounted on a vehicle, comprising:
a left lamp housing defining a part of a left lamp chamber accommodating a left lamp unit;
a right lamp housing defining a part of a right lamp chamber accommodating a right lamp unit;
a left camera unit accommodated in the left lamp chamber;
a right camera unit accommodated in the right lamp chamber;
a light source configured to emit reference light; and
a detector configured to detect misalignment of at least one of an optical axis of the left camera unit and an optical axis of the right camera unit based on at least one of an image of the reference light in a left image acquired by the left camera unit and an image of the reference light in a right image acquired by the right camera unit.

The detection result can be read as necessary by a maintenance worker or the like, and can be used for an operation of adjusting the positions and the attitudes of the left lamp housing and the right lamp housing with respect to the vehicle. Alternatively, the detection result may be used as correction information when the left image and the right image are processed without performing mechanical adjustments on the left lamp housing and the right lamp housing. For example, when a misalignment of the optical axis of the right camera unit is detected, correction corresponding to necessary adjustment is applied to the right image signal outputted from the right camera unit, so that image processing is performed based on the corrected right image signal.

The merit of configuring the stereo camera system by the left camera unit accommodated in the left lamp chamber and the right camera unit accommodated in the right lamp chamber is that a longer base line length (distance between the optical axes of the two cameras) can be easily secured in comparison with the stereo camera system installed in the vicinity of the room mirror in the vehicle cabin. As a result, the distant visual recognition capability is enhanced. Further, since the stereo camera system is removed from the vicinity of the room mirror, the field of view of the driver is expanded.

On the other hand, as compared with the case where the stereo camera system is installed in the vehicle cabin, there is a possibility that a misalignment occurs in the optical axis of each camera unit. This is because the deviations of the positions or the attitudes of the left lamp housing and the right lamp housing with respect to the vehicle body can occur independently from each other. However, by enabling the adjustment and the correction using the reference light, the information acquisition capability of the sensor system including the stereo camera system can be enhanced.

The sensor system according to the fourth illustrative aspect may be configured such that the light source is configured to emit the reference light toward an area where an area an image of which can be captured by the left camera unit and an area an image of which can be captured by the right camera unit overlap.

According to such a configuration, the number of light sources required to emit the reference light can be minimized.

The sensor system according to the fourth illustrative aspect may be configured so as to further comprise a support supporting the left lamp housing and the right lamp housing, and adapted to be attached to the vehicle.

According to such a configuration, each camera unit and the light source need not to be positioned with respect to each other in advance.

The sensor system according to the fourth illustrative aspect may be configured such that the light source is supported at a position that is displaceable relative to the left lamp housing and the right lamp housing.

According to such a configuration, it is possible to suppress the misalignment of the optical axes of the left camera unit and the right camera unit caused by the relative displacement of the left lamp housing and the right lamp housing.

In order to achieve the second object described above, a fifth illustrative aspect of the presently disclosed subject matter provides a sensor system adapted to be mounted on a vehicle, comprising:
a left camera unit configured to acquire a left image of at least an outside area of the vehicle;
a right camera unit configured to acquire a right image of at least the outside area of the vehicle; and
a controller capable of communicating with the left camera unit and the right camera unit, the controller configured to:
   acquire first distance information corresponding to a distance to an object based on the left image and the right image;
   compare the first distance information with second distance information corresponding to a distance to the object that has been acquired independently of the left camera unit and the right camera unit; and
   generate calibration information for calibrating at least one of the left camera unit and the right camera unit based on a comparison result between the first distance information and the second distance information.

The calibration information is generated as an adjustment amount necessary to match the first distance information with the second distance information. The calibration information is stored by the controller. The calibration information may be read as necessary by a maintenance worker or the like, and may be used for calibrating operations of the left camera unit and the right camera unit. Alternatively, the correction information may be used when the distance measurement processing is performed by the controller without performing mechanical calibration on the left camera unit and the right camera unit. For example, when information indicating necessity of the calibration is obtained in the left camera unit, correction corresponding to the necessary calibration is added to the left image signal outputted from the left camera unit, so that distance measurement processing is performed based on the corrected left image signal. As a result, it is possible to suppress degradation in the information acquisition capability of the sensor system including the stereo camera system.

The sensor system according to the fifth illustrative aspect may be configured so as to further comprise a sensor unit adapted to be mounted on the vehicle and configured to acquire a distance to the object. Here, the controller is configured to communicate with the sensor unit to acquire the distance as the second distance information.

According to such a configuration, it is unnecessary to store the information on the distance to the object in advance. Therefore, it is possible to enhance the degree of freedom regarding the selection of the object to be used for the generation of the calibration information and the timing of the generation of the calibration information.

The sensor system according to the fifth illustrative aspect may be configured so as to further comprise a communicator configured to acquire infrastructure information via communication. Here, the controller is configured to acquire the infrastructure information as the second distance information.

Even with such a configuration, it is unnecessary to store the information on the distance to the object in advance. Therefore, it is possible to enhance the degree of freedom regarding the selection of the object to be used for the generation of the calibration information and the timing of the generation of the calibration information.

In order to achieve the second object described above, a sixth illustrative aspect of the presently disclosed subject matter provides a sensor system adapted to be mounted on a vehicle, comprising:
a left camera unit configured to acquire a left image of at least an outside area of the vehicle;
a right camera unit configured to acquire a right image of at least the outside area of the vehicle; and
a controller capable of communicating with the left camera unit and the right camera unit, the controller configured to:
   acquire first distance information corresponding to a distance to an object based on the left image and the right image;
   compare the first distance information with second distance information corresponding to a distance to the object that has been acquired independently of the left camera unit and the right camera unit; and
   detect abnormality of at least one of the left camera unit and the right camera unit based on a comparison result between the first distance information and the second distance information.

According to such a configuration, a user can clean the transparent cover or perform maintenance and inspection of the camera unit in order to solve the abnormality. As a result, it is possible to suppress degradation in the information acquisition capability of the sensor system including the stereo camera system.

The sensor system according to the sixth illustrative aspect may be configured so as to further comprise a sensor unit adapted to be mounted on the vehicle and configured to acquire a distance to the object. Here, the controller is configured to communicate with the sensor unit to acquire the distance as the second distance information.

According to such a configuration, it is unnecessary to store the information on the distance to the object in advance. Therefore, it is possible to enhance the degree of freedom regarding the selection of the object to be used for the abnormality detection and the timing of the abnormality detection.

The sensor system according to the sixth illustrative aspect may be configured so as to further comprise a communicator configured to acquire infrastructure information via communication. Here, the controller is configured to acquire the infrastructure information as the second distance information.

Even with such a configuration, it is unnecessary to store the information on the distance to the object in advance. Therefore, it is possible to enhance the degree of freedom regarding the selection of the object to be used for the generation of the calibration information and the timing of the generation of the calibration information.

The sensor system according to the sixth illustrative aspect may be configured such that the controller is configured to, in a case where the abnormality of at least one of the left camera unit and the right camera unit is detected, stop acquiring the first distance information and continue recognition processing of the object based on an image acquired by a normal camera unit.

According to such a configuration, even when at least one of the left camera unit and the right camera unit has an abnormality, it is possible to minimize degradation in the information acquisition capability of the sensor system.

In order to achieve the second object described above, a seventh illustrative aspect of the presently disclosed subject matter provides a sensor system adapted to be mounted on a vehicle, comprising:
a left camera unit configured to acquire a left image of at least an outside area of the vehicle;
a right camera unit configured to acquire a right image of at least the outside area of the vehicle;
a sensor unit configured to acquire information on a position of an object situating in the outside area;
a controller capable of communicating with the left camera unit, the right camera unit, and the sensor unit, the controller configured to narrow at least one of an area of the left image to be processed that includes an image of the object and an area of the right image to be processed that includes an image of the object.

According to such a configuration, it is possible to reduce the processing load and enhance the processing speed as compared with the case where image processing is performed on the entire left image and the entire right image. Therefore, it is possible to suppress degradation in the information processing capability of the sensor system including the stereo camera system.

The sensor system according to each of the fifth to seventh illustrative aspects may be configured so as to further comprise: a left lamp housing defining a part of a left lamp chamber accommodating a left lamp unit; and a right lamp housing defining a part of a right lamp chamber accommodating a right lamp unit. Here, the left camera unit is accommodated in the left lamp chamber, and the right camera unit is accommodated in the right lamp chamber.

The merit of configuring the stereo camera system by the left camera unit accommodated in the left lamp chamber and the right camera unit accommodated in the right lamp chamber is that a longer base line length (distance between the optical axes of the two cameras) can be easily secured in comparison with the stereo camera system installed in the vicinity of the room mirror in the vehicle cabin. As a result, the distant visual recognition capability is enhanced. Further, since the stereo camera system is removed from the vicinity of the room mirror, the field of view of the driver is expanded.

In order to achieve the third object described above, an eighth illustrative aspect of the presently disclosed subject matter provides a sensor system adapted to be mounted on a vehicle, comprising:
a light source configured to emit light;
a scanner configured to cyclically change an irradiating direction of the light;
a camera unit configured to cyclically acquire an image of at least an outside area of the vehicle; and
a controller configured to match a time point at which the light is irradiated to a reference direction by the scanner with a reference time point in an exposure period for acquiring the image.

According to such a configuration, the cycle in which the irradiating direction of the light is changed by the scanner coincides with the cycle in which the image is acquired by the camera unit. Thus, the position of the light image included in the acquired image is made constant. This makes it easy to remove the influence of the light image on the image recognition. For example, it is possible to perform processing such as excluding a specific area in which light appears from an image recognition target, and it is possible to suppress an increase in the load of the image recognition processing performed using the acquired image. As a result, it is possible to suppress degradation in the information acquisition capability of the sensor system including the camera unit used together with the scanner that cyclically changes the irradiating direction of the light emitted from the light source.

The sensor system according to the eighth illustrative aspect may be configured such that the reference direction corresponds to an end portion of the image.

The field of view of the camera unit is typically designed so that an object required to be recognized is located at the center of the field of view. In other words, the information contained at the end of the field of view of the camera unit tends to be less important than the information contained at the center of the field of view. By making the light image always appear at such a position, it is possible to further suppress the influence of the light image on the image recognition.

In order to achieve the third object described above, a ninth illustrative aspect of the presently disclosed subject matter provides a sensor system adapted to be mounted on a vehicle, comprising:
a light source configured to emit light;
a scanner configured to cyclically change an irradiating direction of the light;
a camera unit configured to cyclically acquire an image of at least an outside area of the vehicle; and
a controller configured to specify a position of an image of the light included in the image based on information corresponding to the irradiating direction and information corresponding to an exposure period for acquiring the image.

If the cycle in which the irradiating direction of the light changes by the scanner and the cycle in which the image is acquired by the camera unit are known, the irradiating direction of the light at the time of a specific exposure operation can be specified by counting, for example, the number of scanning operations by the scanner and the number of exposure operations by the camera unit. As a result, the position of the light image in the acquired image can be specified. According to such a configuration, it is possible to perform image recognition processing based on prediction of an area in which an image of light appears. Therefore, it is possible to suppress degradation in the information acquisition capability of the sensor system including the camera unit used together with the scanner that cyclically changes the irradiating direction of the light emitted from the light source.

The sensor system according to each of the eighth and ninth illustrative aspects may be configured such that the controller is configured to detect abnormality of the scanner based on the position of the image of the light included in the image.

If the scanner is operating normally, the position of the light image appearing in the acquired image is constant or predictable. Therefore, when the position of the light image deviates from the predetermined or predicted position, it can be determined that there is some abnormality in the scanner. Therefore, the light emitted from the light source can also be used for abnormality detection of the scanner.

As used herein, the term "lamp unit" means a constituent unit of a component that can be distributed by itself as a single unit while providing a desired lighting function.

As used herein, the term "camera unit" means a constituent unit of a component that can be distributed by itself as a single unit while providing a desired imaging function.

As used herein, the term "sensor unit" means a constituent unit of a component that can be distributed by itself as a single unit while providing a desired information acquiring function.

### Brief Description of the Drawings

FIG. 1 illustrates a configuration of a sensor system according to a first embodiment.
FIG. 2 illustrates a vehicle on which the sensor system of FIG. 1 is mounted.
FIG. 3 is a diagram for explaining an operation of the sensor system of FIG. 1.
FIG. 4 illustrates a configuration of a part of a sensor system according to a second embodiment.
FIG. 5 is a diagram for explaining an operation of the sensor system of FIG. 4.
FIG. 6 illustrates a configuration of a part of a sensor system according to a third embodiment.
FIG. 7 illustrates a configuration of a sensor system according to a fourth embodiment.
FIG. 8 illustrates a configuration of a sensor system according to a fifth embodiment.
FIG. 9 illustrates a configuration of a sensor system according to a sixth embodiment.
FIG. 10 illustrates a configuration of a sensor system according to a seventh embodiment.
FIG. 11 illustrates a configuration of a sensor system according to an eighth embodiment.
FIGS. 12A to 12C are diagrams illustrating a pitching detection with a marking light source.
FIG. 13 illustrates a configuration of a sensor system according to a ninth embodiment.
FIG. 14 is a flowchart illustrating a first operation example of the sensor system of FIG. 13.
FIG. 15 is a flowchart illustrating a second operation example of the sensor system of FIG. 13.
FIGS. 16A and 16B are diagrams for explaining a third operation example of the sensor system of FIG. 13.
FIG. 17 illustrates a configuration of a sensor system according to a tenth embodiment.
FIGS. 18A and 18B are diagrams for explaining an operation of the sensor system of FIG. 17.
FIG. 19 illustrates a modification example of the sensor system of FIG. 17.

### Description of Embodiments

Examples of embodiments will be described below in detail with reference to the accompanying drawings. In each of the drawings used in the following description, the scale is appropriately changed in order to make each of the members have a recognizable size.

In the accompanying drawings, an arrow F represents a forward direction of the illustrated structure. An arrow B represents a rearward direction of the illustrated structure. An arrow L represents a leftward direction of the illustrated structure. An arrow R represents a rightward direction of the illustrated structure. The terms "left" and "right" used in the following descriptions represent the left-right directions as viewed from the driver's seat.

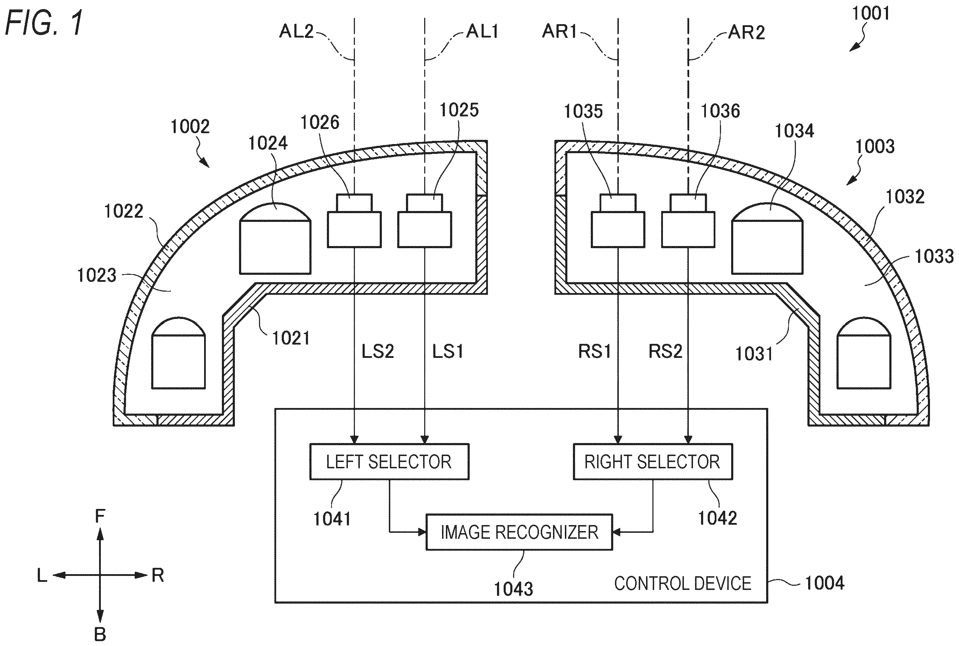

FIG. 1 schematically illustrates a configuration of a sensor system 1001 according to a first embodiment. The sensor system 1001 includes a left lamp device 1002, a right lamp device 1003, and a control device 1004.

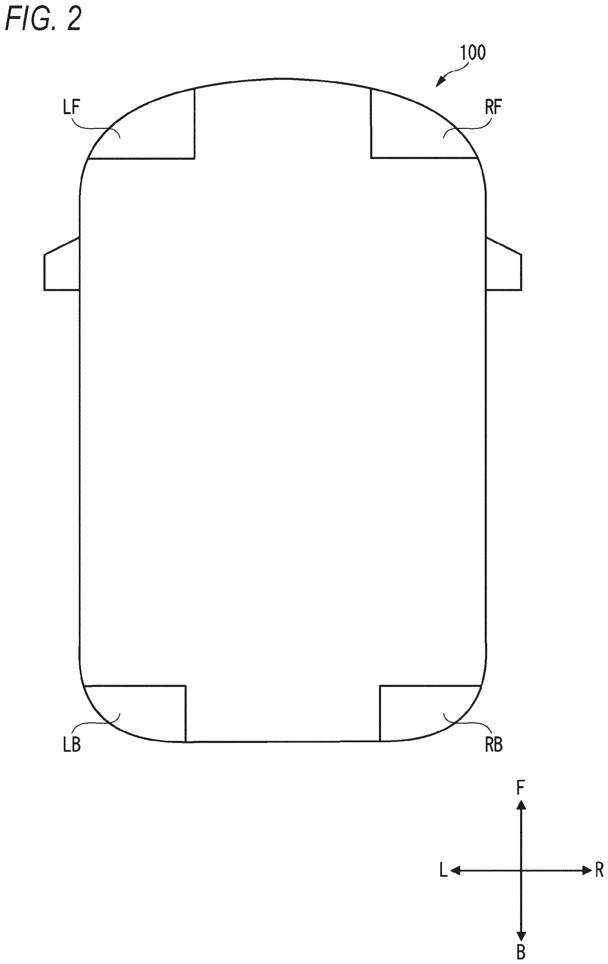

FIG. 2 schematically illustrates a vehicle 100 on which a sensor system 1001 is mounted. The left lamp device 1002 is mounted on the left front corner portion LF of the vehicle 100. The right lamp device 1003 is mounted on the right front corner portion RF of the vehicle 100. The control device 1004 is disposed at an appropriate location in the vehicle 100.

As illustrated in FIG. 1, the left lamp device 1002 includes a left lamp housing 1021 and a left translucent cover 1022. The left translucent cover 1022 forms a part of the outer surface of the vehicle 100. The left translucent cover 1022 and the left lamp housing 1021 define a left lamp chamber 1023. That is, the left lamp housing 1021 defines a part of the left lamp chamber 1023.

The left lamp device 1002 includes a left lamp unit 1024. The left lamp unit 1024 is a lamp that emits light toward at least an area ahead of the vehicle 100. The left lamp unit 1024 is, for example, a headlamp.

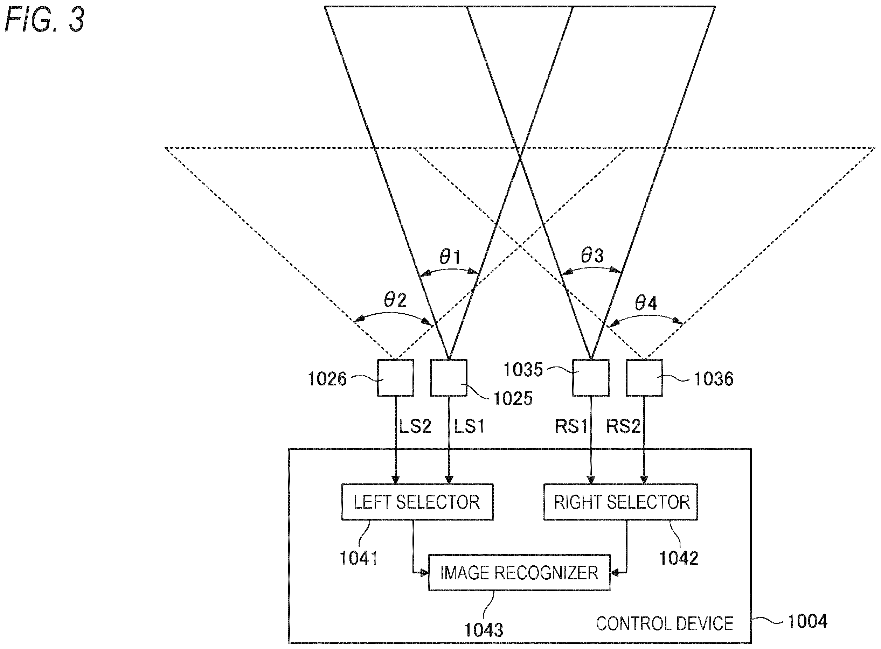

The left lamp device 1002 includes a first left camera unit 1025. The first left camera unit 1025 is accommodated in the left lamp chamber 1023. As illustrated in FIG. 3, the first left camera unit 1025 has a first angle of view θ1. The first left camera unit 1025 captures an image of an outside area of the vehicle 100 included in the first angle of view θ1 (a first left image), and outputs a first left image signal LS1 corresponding to the first left image.

As illustrated in FIG. 1, the left lamp device 1002 includes a second left camera unit 1026. The second left camera unit 1026 is accommodated in the left lamp chamber 1023. As illustrated in FIG. 3, the second left camera unit 1026 has a second angle of view θ2. The second angle of view θ2 is wider than the first angle of view θ1. The second left camera unit 1026 captures an image of an outside area of the vehicle 100 included in the second angle of view θ2 (a second left image), and outputs a second left image signal LS2 corresponding to the second left image.

As illustrated in FIG. 1, the right lamp device 1003 includes a right lamp housing 1031 and a right translucent cover 1032. The right translucent cover 1032 forms a part of the outer surface of the vehicle 100. The right translucent cover 1032 and the right lamp housing 1031 define a right lamp chamber 1033. That is, the right lamp housing 1031 defines a part of the right lamp chamber 1033.

The right lamp device 1003 includes a right lamp unit 1034. The right lamp unit 1034 is a lamp that emits light toward at least an area ahead of the vehicle 100. The right lamp unit 1034 is, for example, a headlamp.

The right lamp device 1003 includes a first right camera unit 1035. The first right camera unit 1035 is accommodated in the right lamp chamber 1033. As illustrated in FIG. 3, the first right camera unit 1035 has a third angle of view θ3. The first right camera unit 1035 captures an image of an outside area of the vehicle 100 included in the third angle of view θ3 (a first right image), and outputs a first right image signal RS1 corresponding to the first right image.

As illustrated in FIG. 1, the right lamp device 1003 includes a second right camera unit 1036. The second right camera unit 1036 is accommodated in the right lamp chamber 1033. As illustrated in FIG. 3, the second right camera unit 1036 has a fourth angle of view θ4. The fourth angle of view θ4 is wider than the third angle of view θ3. The second right camera unit 1036 captures an image of an outside area of the vehicle 100 included in the fourth angle of view θ4 (a second right image), and outputs a second right image signal RS2 corresponding to the second right image.

In the present embodiment, the first angle of view θ1 and the third angle of view θ3 are equal to each other, for example, about 40°. On the other hand, the second angle of view θ2 and the fourth angle of view θ4 are equal to each other, and larger than, for example, 100°. That is, the second left camera unit 1026 and the second right camera unit 1036 can be classified into so-called wide-angle cameras.

As illustrated in FIG. 1, in the present embodiment, an optical axis AL1 of the first left camera unit 1025 and an optical axis AR1 of the first right camera unit 1035 extend in parallel with each other. The height positions of the optical axis AL1 and the optical axis AR1 in an up-down direction of the vehicle 100 coincide with each other. That is, the first left camera unit 1025 and the first right camera unit 1035 constitute a rectified stereo camera system.

On the other hand, the optical axis AL2 of the second left camera unit 1026 and the optical axis AR2 of the second right camera unit 1036 extend in parallel with each other. The height positions of the optical axis AL2 and the optical axis AR2 in the up-down direction of the vehicle 100 coincide with each other. That is, the second left camera unit 1026 and the second right camera unit 1036 constitute a rectified stereo camera system.

The first left image signal LS1, the second left image signal LS2, the first right image signal RS1, and the second right image signal RS2 are inputted to the control device 1004. The control device 1004 includes a left selector 1041, a right selector 1042, and an image recognizer 1043.

The left selector 1041 is configured to be able to select one of the first left image signal LS1 and the second left image signal LS2. That is, the left selector 1041 is configured to be able to select one of the first left image and the second left image as a left image. The selected signal corresponding to the left image is inputted to the image recognizer 1043.

The right selector 1042 is configured to be able to select one of the first right image signal RS1 and the second right image signal RS2. That is, the right selector 1042 is configured to be able to select one of the first right image and the second right image as a right image. The selected signal corresponding to the right image is inputted to the image recognizer 1043.

The image recognizer 1043 is configured to perform image recognition based on the signal inputted from the left selector 1041 and the signal inputted from the right selector 1042. That is, the image recognizer 1043 performs the image recognition based on the left image selected from one of the first left image and the second left image, as well as the right image selected from one of the first right image and the second right image.

The merit of configuring the stereo camera system with the first left camera unit 1025 accommodated in the left lamp chamber 1023 and the first right camera unit 1035 accommodated in the right lamp chamber 1033 is that a longer base line length (distance between the optical axes of both cameras) can be easily secured in comparison with a stereo camera system installed in the vicinity of the room mirror in the vehicle cabin. As a result, the distant visual recognition capability is enhanced. Further, since the stereo camera system is removed from the vicinity of the room mirror, the field of view of the driver is expanded.

However, as indicated by the solid lines in FIG. 3, although the distant visual recognition capability is enhanced by increasing the base line length, it is inevitable that a blind spot area in the closer range is widened. In the present embodiment, in order to compensate for the blind spot area, it is employed the stereo camera system including the second left camera unit 1026 and the second right camera unit 1036 having the wider angle of view. As the angle of view increases, the distant visual recognition capability decreases. However, as indicated by dashed lines in FIG. 3, a wide visible area can be secured in the closer range to cover the blind spot area of the stereo camera system including the first left camera unit 1025 and the first right camera unit 1035.

According to the configuration of the present embodiment, the image recognition performed by the image recognizer 1043 can be optimized by appropriately combining the images captured by the first left camera unit 1025 and the first right camera unit 1035 having relatively high distant visual recognition capability and the images captured by the second left camera unit 1026 and the second right camera unit 1036 having relatively high proximate visual recognition capability. Therefore, the information acquisition capability of the sensor system including the stereo camera system can be enhanced.

For example, based on a signal corresponding to the speed of the vehicle 100 inputted from a speed sensor (not illustrated) to the control device 1004, the image to be subjected to the image recognition by the image recognizer 1043 is switched.

More specifically, when the speed is no less than a predetermined threshold value, the first left camera unit 1025 and the first right camera unit 1035 having relatively high distant visual recognition capability are selected. That is, the left selector 1041 selects the first left image signal LS1, and the right selector 1042 selects the first right image signal RS1. The image recognizer 1043 performs the image recognition based on the first left image and the first right image as selected.

When the speed is less than the predetermined threshold value, the second left camera unit 1026 and the second right camera unit 1036 having relatively high proximate visual recognition capability are selected. That is, the left selector 1041 selects the second left image signal LS2, and the right selector 1042 selects the second right image signal RS2. The image recognizer 1043 performs the image recognition based on the second left image and the second right image as selected.

As the vehicle speed increases, it is required to reliably acquire information of a farther area. Conversely, as the vehicle speed decreases, it is required to reliably acquire information of a closer area. According to the above configuration, it is possible to accurately acquire the information of an increasingly demanded area in accordance with the vehicle speed.

It is also possible to select a combination of the first left camera unit 1025 having a relatively narrow angle of view and the second right camera unit 1036 having a relatively wide angle of view, or a combination of the second left camera unit 1026 having a relatively wide angle of view and the first right camera unit 1035 having a relatively narrow angle of view. For example, an appropriate camera unit can be selected in accordance with the position of and the distance to an object detected by a sensor (not illustrated) such as a LiDAR sensor and a millimeter-wave radar.

In this case, it is preferable that the first left camera unit 1025 and the second right camera unit 1036 also constitute a rectified stereo camera system. Similarly, the second left camera unit 1026 and the first right camera unit 1035 also preferably constitute a rectified stereo camera system.

The control device 1004 includes a processor and a memory. Examples of the processor include a CPU and an MPU. The processor may include multiple processor cores. Examples of the memory include ROM and RAM. The ROM may store a program for executing the processing described above. The program may include an artificial intelligence program. Examples of the artificial intelligence program may include a learned neural network with deep learning. The processor may designate at least a part of the program stored in the ROM, load the program on the RAM, and execute the processing described above in cooperation with the RAM.

At least some of the functions of the left selector 1041, the right selector 1042, and the image recognizer 1043 may be implemented by at least one hardware resource (e.g., an integrated circuit such as an ASIC or an FPGA) that differs from the above-described processor and memory, or may be implemented as a software function executed by the above-described processor and memory. For example, the image recognizer 1043 may be configured as a GPU that constantly receives the first left image signal LS1, the second left image signal LS2, the first right image signal RS1, and the second right image signal RS2. In this case, the functions of the left selector 1041 and the right selector 1042 may be integrated into the processing performed in the GPU.

In the present embodiment, the control device 1004 passively receives the first left image signal LS1, the second left image signal LS2, the first right image signal RS1, and the second right image signal RS2. However, the control device 1004 may be configured to actively cause any two of the first left camera unit 1025, the second left camera unit 1026, the first right camera unit 1035, and the second right camera unit 1036 to output necessary signals.

In the present embodiment, the control device 1004 is disposed in the vehicle 100 on which the left lamp device 1002 and the right lamp device 1003 are mounted. However, the control device 1004 may be mounted on either the left lamp device 1002 or the right lamp device 1003.

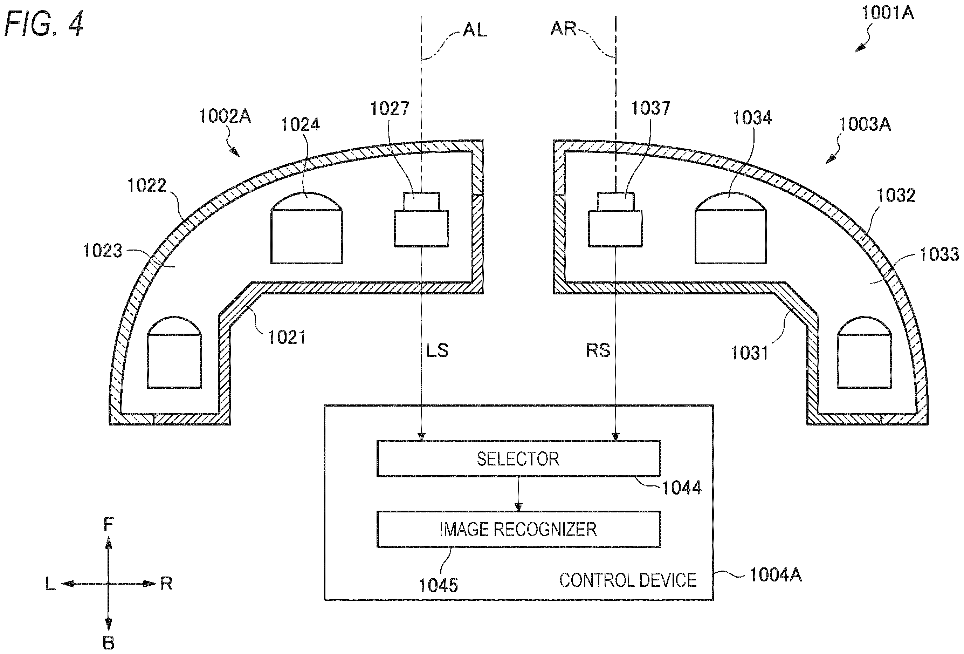

FIG. 4 schematically illustrates a configuration of a sensor system 1001A according to a second embodiment. The sensor system 1001A includes a left lamp device 1002A, a right lamp device 1003A, and a control device 1004A. Components having substantially the same configurations and functions as those of the sensor system 1001 according to the first embodiment are denoted by the same reference symbols, and repetitive descriptions thereof will be omitted.

The left lamp device 1002A is mounted on the left front corner portion LF of the vehicle 100 illustrated in FIG. 2. The right lamp device 1003A is mounted on the right front corner portion RF of the vehicle 100. The control device 1004A is disposed at an appropriate position in the vehicle 100.

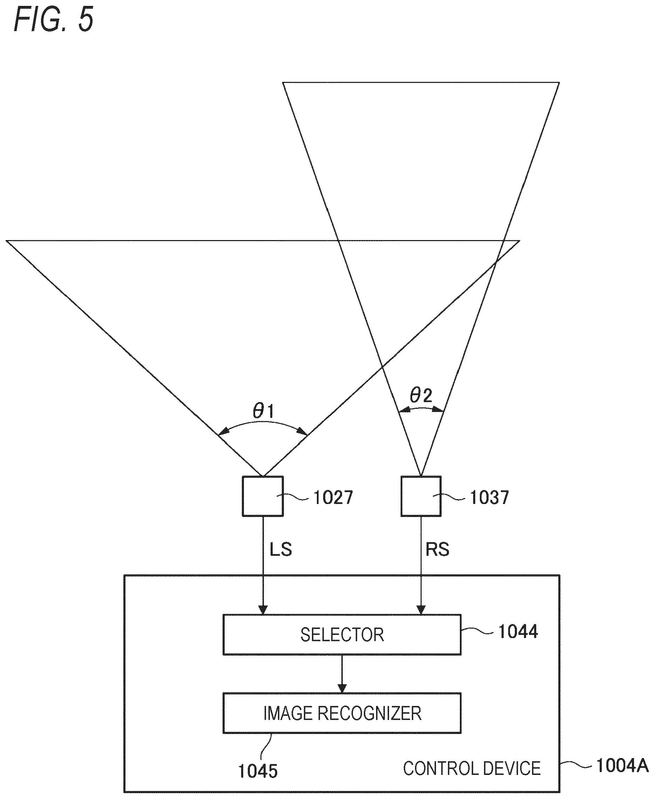

As illustrated in FIG. 4, the left lamp device 1002A includes a left camera unit 1027. The left camera unit 1027 is accommodated in the left lamp chamber 1023. As illustrated in FIG. 5, the left camera unit 1027 has a first angle of view θ1. The left camera unit 1027 captures an image of an outside area of the vehicle 100 included in the first angle of view θ1 (a left image), and outputs a left image signal LS corresponding to the left image.

As illustrated in FIG. 4, the right lamp device 1003A includes a right camera unit 1037. The right camera unit 1037 is accommodated in the right lamp chamber 1033. As illustrated in FIG. 5, the right camera unit 1037 has a second angle of view θ2. The right camera unit 1037 captures an image of an outside area of the vehicle 100 included in the second angle of view θ2 (a right image), and outputs a right image signal RS corresponding to the right image.

In the present embodiment, the second angle of view θ2 is different from the first angle of view θ1. The second angle of view θ2 is narrower than the first angle of view θ1. The first angle of view θ1 is larger than, for example, 100°. The second angle of view θ2 is, for example, about 40°. That is, the left camera unit 1027 can be classified as a so-called wide-angle camera.

As illustrated in FIG. 4, in the present embodiment, the optical axis AL of the left camera unit 1027 and the optical axis AR of the right camera unit 1037 extend in parallel. The height positions of the optical axis AL and the optical axis AR in the up-down direction of the vehicle 100 coincide with each other. That is, the left camera unit 1027 and the right camera unit 1037 constitute a rectified stereo camera system.

The left image signal LS and the right image signal RS are inputted to the control device 1004A. The control device 1004A includes a selector 1044 and an image recognizer 1045.

The selector 1044 is configured to be able to select at least one of the left image signal LS and the right image signal RS. That is, the selector 1044 is configured to be able to select at least one of a left image and a right image. The selected signal is inputted to the image recognizer 1045.

The image recognizer 1045 is configured to perform image recognition based on a signal inputted from the selector 1044. That is, the image recognizer 1045 performs the image recognition based on at least one of the left image and the right image.

The merit of configuring the stereo camera system with the left camera unit 1027 accommodated in the left lamp chamber 1023 and the right camera unit 1037 accommodated in the right lamp chamber 1033 is that a longer base line length (distance between the optical axes of both cameras) can be easily secured in comparison with a stereo camera system installed in the vicinity of the room mirror in the vehicle cabin. As a result, the distant visual recognition capability is enhanced. Further, since the stereo camera system is removed from the vicinity of the room mirror, the field of view of the driver is expanded.

However, when four camera units are required as in the sensor system 1001 according to the first embodiment, there would be a case where the requirements relating to layout and cost are not satisfied. The present embodiment employs a configuration in which a stereo camera system is established under a certain condition and switched to a monocular camera system as necessary. In this case, the information acquisition capability of the sensor system including the stereo camera system can be enhanced while satisfying the requirements related to layout and cost.

For example, based on a signal corresponding to the speed of the vehicle 100 inputted from a speed sensor (not illustrated) to the control device 1004A, the image to be subjected to the image recognition by the image recognizer 1045 is switched.

More specifically, when the speed is no less than a predetermined first threshold value, the right camera unit 1037 having a relatively high distant visual recognition capability is selected. That is, the selector 1044 selects the right image signal RS. The image recognizer 1045 performs image recognition based on the selected right image.

When the speed is less than the predetermined second threshold value, the left camera unit 1027 having a relatively high proximate visual recognition capability is selected. That is, the selector 1044 selects the left image signal LS. The image recognizer 1045 performs image recognition based on the selected left image.

When the speed is no less than the second threshold value and less than the first threshold value, both the left camera unit 1027 and the right camera unit 1037 are selected, and the stereo camera system is established. That is, the selector 1044 selects both the left image signal LS and the right image signal RS. The image recognizer 1045 performs image recognition based on both the left image and the right image.

As the vehicle speed increases, it is required to reliably acquire information of a farther area. Conversely, as the vehicle speed decreases, it is required to reliably acquire information of a closer area. According to the above configuration, it is possible to accurately acquire the information of an increasingly demanded area in accordance with the vehicle speed.

Alternatively, an appropriate camera unit can be selected in accordance with the position of and the distance to an object detected by a sensor (not illustrated) such as a LiDAR sensor and a millimeter-wave radar.

The control device 1004A includes a processor and a memory. Examples of the processor include a CPU and an MPU. The processor may include multiple processor cores. Examples of the memory include ROM and RAM. The ROM may store a program for executing the processing described above. The program may include an artificial intelligence program. Examples of the artificial intelligence program may include a learned neural network with deep learning. The processor may designate at least a part of the program stored in the ROM, load the program on the RAM, and execute the processing described above in cooperation with the RAM.

At least some of the functions of the selector 1044 and the image recognizer 1045 may be implemented by at least one hardware resource (e.g., an integrated circuit such as an ASIC or an FPGA) that differs from the above-described processor and memory, or may be implemented as a software function executed by the above-described processor and memory. For example, the image recognizer 1045 may be configured as a GPU that constantly receives the left image signal LS and the right image signal RS. In this case, the functions of the selector 1044 may be integrated into the processing performed in the GPU.

In the present embodiment, the control device 1004A passively receives the left image signal LS and the right image signal RS. However, the control device 1004A may be configured to actively cause at least one of the left camera unit 1027 and the right camera unit 1037 to output necessary signals.

In the present embodiment, the control device 1004A is disposed in the vehicle 100 on which the left lamp device 1002A and the right lamp device 1003A are mounted. However, the control device 1004A may be mounted on either the left lamp device 1002A or the right lamp device 1003A.

In the present embodiment, the first angle of view θ1 of the left camera unit 1027 is wider than the second angle of view θ2 of the right camera unit 1037. However, the second angle of view θ2 of the right camera unit 1037 may be wider than the first angle of view θ1 of the left camera unit 1027. Preferably, the angle of view of the camera unit disposed in the lamp room located closer to the opposite lane is set to be narrower.

If information of a distant area is acquired by a sensor other than the camera such as a LiDAR sensor or a millimeter-wave radar, both the left camera unit 1027 and the right camera unit 1037 may be configured as a wide-angle camera unit.

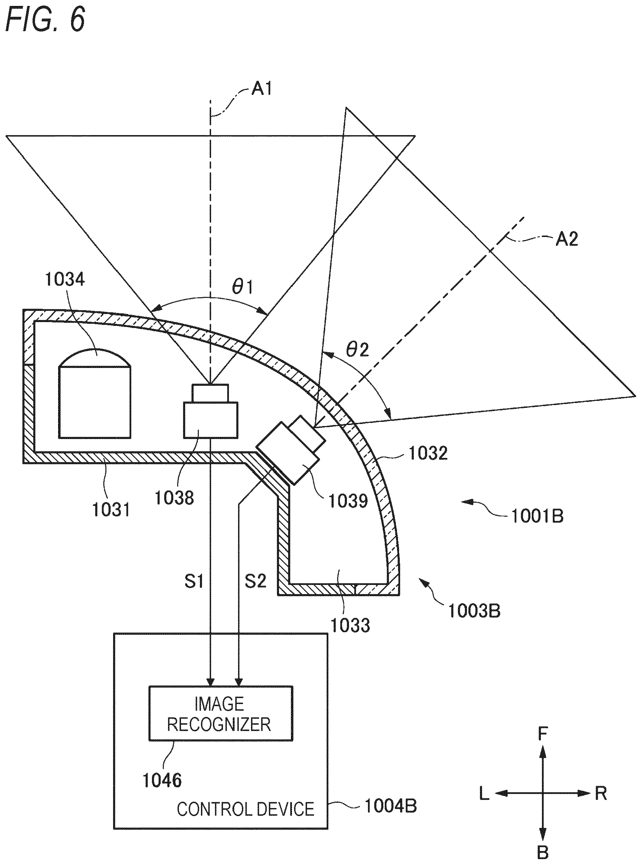

FIG. 6 schematically illustrates a configuration of a sensor system 1001B according to the third embodiment. The sensor system 1001B includes a right lamp device 1003B and a control device 1004B. Components having substantially the same configurations and functions as those of the sensor system 1001 according to the first embodiment are denoted by the same reference symbols, and repetitive descriptions thereof will be omitted.

The right lamp device 1003B is mounted on the right front corner portion RF of the vehicle 100. In the left front corner portion LF of the vehicle 100, a left lamp device having a configuration symmetrical with the right lamp device 1003B is mounted. The control device 1004B is disposed at an appropriate position in the vehicle 100.

The right lamp device 1003B includes a first camera unit 1038. The first camera unit 1038 is accommodated in the right lamp chamber 1033. The first camera unit 1038 has a first angle of view θ1. The first camera unit 1038 captures an image of at least an area ahead of the vehicle 100 included in the first angle of view θ1 (a left image), and outputs a first image signal S1 corresponding to the first image.

The right lamp device 1003B includes a second camera unit 1039. The second camera unit 1039 is accommodated in the right lamp chamber 1033. The second camera unit 1039 has a second angle of view θ2. The second camera unit 1039 captures an image of at least an area on the right of the vehicle 100 included in the second angle of view θ2, and outputs a second image signal S2 corresponding to the second image.

In the present embodiment, the first angle of view θ1 and the second angle of view θ2 are equal to each other. The first angle of view θ1 and the second angle of view θ2 are larger than, for example, 100°. That is, the first camera unit 1038 and the second camera unit 1039 can be classified into so-called wide-angle cameras. However, the first angle of view θ1 and the second angle of view θ2 may be different from each other.

In the present embodiment, the first optical axis A1 of the first camera unit 1038 and the second optical axis A2 of the second camera unit 1039 are oriented in different directions.

The first image signal S1 and the second image signal S2 are inputted to the control device 1004B. The control device 1004B includes an image recognizer 1046.

The image recognizer 1046 is configured to perform image recognition on the basis of signals inputted from the first camera unit 1038 and the second camera unit 1039. That is, the image recognizer 1046 performs the image recognition based on the first image and the second image.

According to such a configuration, since the first optical axis A1 of the first camera unit 1038 and the second optical axis A2 of the second camera unit 1039 are oriented in different directions, the calculation processing related to the image recognition becomes more complicated than the rectified stereo camera system, but the image recognition by the stereo camera system can be performed over a wider angle range. Therefore, the information acquisition capability of the sensor system including the stereo camera system can be enhanced.

In the present embodiment, both the first camera unit 1038 and the second camera unit 1039 are accommodated in the right lamp chamber 1033. In this case, it is possible to make the configuration similar to the rectified stereo camera system, so that it is possible to suppress an increase in the load relating to the image recognition.

However, as long as the first optical axis A1 and the second optical axis A2 are oriented in different directions, at least one of the first camera unit 1038 and the second camera unit 1039 may be disposed outside the right lamp chamber 1033.

The control device 1004B includes a processor and a memory. Examples of the processor include a CPU and an MPU. The processor may include multiple processor cores. Examples of the memory include ROM and RAM. The ROM may store a program for executing the processing described above. The program may include an artificial intelligence program. Examples of the artificial intelligence program may include a learned neural network with deep learning. The processor may designate at least a part of the program stored in the ROM, load the program on the RAM, and execute the processing described above in cooperation with the RAM.

At least some of the functions of the image recognizer 1046 may be implemented by at least one hardware resource (e.g., an integrated circuit such as an ASIC or an FPGA) that differs from the above-described processor and memory, or may be implemented as a software function executed by the above-described processor and memory.

In the present embodiment, the control device 1004B is disposed in the vehicle 100 on which the left lamp device and the right lamp device 1003B are mounted. However, the control device 1004B may be mounted on either the left lamp device or the right lamp device 1003B.

The first to third embodiments described above are mere examples to facilitate understanding of the presently disclosed subject matter. Each configuration according to the first embodiment to the third embodiment can be appropriately modified without departing from the gist of the presently disclosed subject matter.

As used herein, the term "left lamp housing" means a lamp housing which is located on the left of the right lamp housing when viewed from the vehicle cabin. As used herein, the term "right lamp housing" means a lamp housing located on the right of the left lamp housing when viewed from the vehicle cabin.

Thus, as long as a stereo camera system is established, the left lamp housing need not be disposed in the left portion of the vehicle 100, and the right lamp housing need not be disposed in the right portion of the vehicle 100. For example, the left lamp device 1002 may be disposed in the right rear corner portion RB of the vehicle 100 illustrated in FIG. 2. In this case, the right lamp device 1003 may be disposed in the left rear corner portion LB of the vehicle 100. Alternatively, the left lamp device 1002 may be disposed in the left rear corner portion LB of the vehicle 100. In this case, the right lamp device 1003 may be disposed in the left front corner portion LF of the vehicle 100.

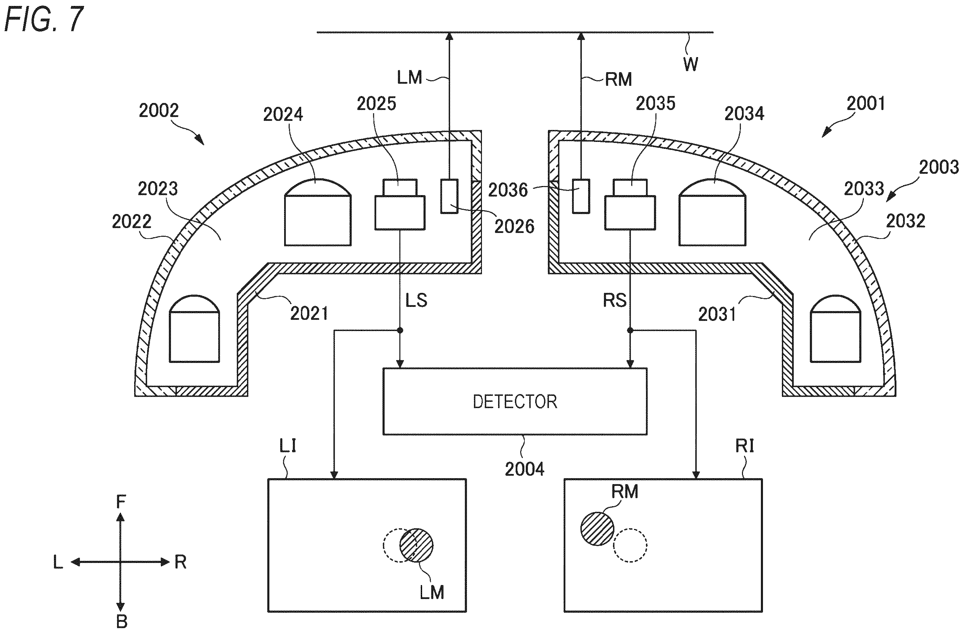

FIG. 7 schematically illustrates a configuration of a sensor system 2001 according to a fourth embodiment. The sensor system 2001 includes a left lamp device 2002 and a right lamp device 2003.

The left lamp device 2002 is mounted on the left front corner portion LF of the vehicle 100 illustrated in FIG. 2. The right lamp device 2003 is mounted on the right front corner portion RF of the vehicle 100.

As illustrated in FIG. 7, the left lamp device 2002 includes a left lamp housing 2021 and a left translucent cover 2022. The left translucent cover 2022 forms a part of the outer surface of the vehicle 100. The left translucent cover 2022 and the left lamp housing 2021 define a left lamp chamber 2023. That is, the left lamp housing 2021 defines a part of the left lamp chamber 2023.

The left lamp device 2002 includes a left lamp unit 2024. The left lamp unit 2024 is a lamp that emits light toward at least an area ahead of the vehicle 100. The left lamp unit 2024 is, for example, a headlamp.

The left lamp device 2002 includes a left camera unit 2025. The left camera unit 2025 is accommodated in the left lamp chamber 2023. The left camera unit 2025 captures an image of an outside area of the vehicle 100 included in the field of view (a left image LI), and outputs a left image signal LS corresponding to the left image LI.

The left lamp device 2002 includes a left marking light source 2026. The left marking light source 2026 is accommodated in the left lamp chamber 2023. The left marking light source 2026 is configured to emit the left marking light LM into the field of view of the left camera unit 2025. Examples of the left marking light source 2026 include a light emitting diode and a laser diode. The wavelength of the left marking light LM is determined as a wavelength at which the left camera unit 2025 has sensitivity. The left marking light LM is an example of the reference light.

The right lamp device 2003 includes a right lamp housing 2031 and a right translucent cover 2032. The right translucent cover 2032 forms a part of the outer surface of the vehicle 100. The right translucent cover 2032 and the right lamp housing 2031 define a right lamp chamber 2033. That is, the right lamp housing 2031 defines a part of the right lamp chamber 2033.

The right lamp device 2003 includes a right lamp unit 2034. The right lamp unit 2034 is a lamp that emits light toward at least an area ahead of the vehicle 100. The right lamp unit 2034 is, for example, a headlamp.

The right lamp device 2003 includes a right camera unit 2035. The right camera unit 2035 is accommodated in the right lamp chamber 2033. The right camera unit 2035 captures an image of an outside area of the vehicle 100 included in the field of view (a right image RI), and outputs a right image signal RS corresponding to the right image RI.

The field of view of the left camera unit 2025 and the field of view of the right camera unit 2035 partially overlap. Accordingly, the left camera unit 2025 and the right camera unit 2035 constitute a stereo camera system.

The right lamp device 2003 includes a right marking light source 2036. The right marking light source 2036 is accommodated in the right lamp chamber 2033. The right marking light source 2036 is configured to emit the right marking light RM into the field of view of the right camera unit 2035. Examples of the right marking light source 2036 include a light emitting diode and a laser diode. The wavelength of the right marking light RM is determined as a wavelength at which the right camera unit 2035 has sensitivity. The right marking light RM is an example of the reference light.

The sensor system 2001 includes a detector 2004. The detector 2004 can communicate with the left camera unit 2025 and the right camera unit 2035. The left image signal LS and the right image signal RS are inputted to the detector 2004.

The detector 2004 includes a processor and a memory. Examples of the processor include a CPU and an MPU. The processor may include multiple processor cores. Examples of the memory include ROM and RAM. The ROM may store a program for executing the processing described above. The program may include an artificial intelligence program. Examples of the artificial intelligence program may include a learned neural network with deep learning. The processor designates at least a part of the program stored in the ROM, loads the program on the RAM, and executes predetermined processing in cooperation with the RAM. The detector 2004 may be implemented by an integrated circuit (hardware resource) such as an ASIC or an FPGA, or by a combination of the hardware resource and the above-mentioned processor and memory.

The detector 2004 is configured to detect the misalignment of the optical axis of the left camera unit 2025 based on the image of the left marking light LM in the left image LI acquired by the left camera unit 2025. The detector 2004 is configured to detect the misalignment of the optical axis of the right camera unit 2035 based on the image of the right marking light RM in the right image RI acquired by the right camera unit 2035.

Specifically, the left marking light source 2026 emits the left marking light LM toward a wall W disposed in the field of view of the left camera unit 2025. The distance between the wall W and the left camera unit 2025 is determined in advance. An image of the left marking light LM is formed on the wall W. The image of the left marking light LM is included in the left image LI acquired by the left camera unit 2025.

The positional relationship between the left camera unit 2025 and the left marking light source 2026 is adjusted in advance. Accordingly, if the distance between the wall W and the left camera unit 2025 is known, the position of the image of the left marking light LM appearing in the left image LI can be specified. The dashed-line circle illustrated in the left image LI indicates the position at which the image of the left marking light LM shall appear.

As illustrated in the figure, when the position of the image of the left marking light LM deviates from the position where it shall appear, it is understood that the optical axis of the left camera unit 2025 is misaligned from the predetermined position or direction. Such a misalignment would occur when the left lamp device 2002 is mounted on the vehicle 100, or by a change in the position or posture of the left lamp device 2002 during the use of the vehicle 100. The detector 2004 detects the misalignment. The detection result is stored by the detector 2004.

The detection result can be read as necessary by a maintenance worker or the like, and can be used for an operation of adjusting the position and attitude of the left lamp device 2002 with respect to the vehicle 100. Alternatively, the detection result may be used as correction information when the left image LI is processed without performing mechanical adjustment on the left lamp device 2002. For example, when a misalignment of the optical axis of the left camera unit 2025 is detected, correction corresponding to necessary adjustment is applied to the left image signal LS outputted from the left camera unit 2025, so that image processing is performed based on the corrected left image signal LS.

Similarly, the right marking light source 2036 emits the right marking light RM toward the wall W disposed in the field of view of the right camera unit 2035. The distance between the wall W and the right camera unit 2035 is determined in advance. An image of the right marking light RM is formed on the wall W. The image of the right marking light RM is included in the right image RI acquired by the right camera unit 2035.

The positional relationship between the right camera unit 2035 and the right marking light source 2036 is adjusted in advance. Accordingly, if the distance between the wall W and the right camera unit 2035 is known, the position of the image of the right marking light RM appearing in the right image RI can be specified. The dashed-line circle illustrated in the right image RI indicates the position at which the image of the right marking light RM shall appear.

As illustrated in the figure, when the position of the image of the right marking light RM deviates from the position where it shall appear, it is understood that the optical axis of the right camera unit 2035 is misaligned from the predetermined position or direction. Such a misalignment would occur when the right lamp device 2003 is mounted on the vehicle 100, or by a change in the position or posture of the right lamp device 2003 during the use of the vehicle 100. The detector 2004 detects the misalignment. The detection result is stored by the detector 2004.

The detection result can be read out as necessary by a maintenance worker or the like, and can be used for an operation of adjusting the position and attitude of the right lamp device 2003 with respect to the vehicle 100. Alternatively, the detection result may be used as correction information when the right image RI is processed without performing mechanical adjustment on the right lamp device 2003. For example, when a misalignment of the optical axis of the right camera unit 2035 is detected, correction corresponding to necessary adjustment is applied to the right image signal RS outputted from the right camera unit 2035, so that image processing is performed based on the corrected right image signal RS.

The merit of configuring the stereo camera system by the left camera unit 2025 accommodated in the left lamp chamber 2023 and the right camera unit 2035 accommodated in the right lamp chamber 2033 is that a longer base line length (distance between the optical axes of the two cameras) can be easily secured in comparison with the stereo camera system installed in the vicinity of the room mirror in the vehicle cabin. As a result, the distant visual recognition capability is enhanced. Further, since the stereo camera system is removed from the vicinity of the room mirror, the field of view of the driver is expanded.

On the other hand, as compared with the case where the stereo camera system is installed in the vehicle cabin, there is a possibility that a misalignment occurs in the optical axis of each camera unit. This is because the deviations of the positions or the attitudes of the left lamp device 2002 and the right lamp device 2003 with respect to the vehicle 100 can occur independently from each other. However, by enabling the adjustment and the correction using the marking light as described above, the information acquisition capability of the sensor system including the stereo camera system can be enhanced.

The detector 2004 may be provided at an appropriate position in the vehicle 100 on which the left lamp device 2002 and the right lamp device 2003 are mounted, or may be provided in either the left lamp device 2002 or the right lamp device 2003. In addition, a detector for detecting the misalignment of the optical axis of the left camera unit 2025 and a detector for detecting the misalignment of the optical axis of the right camera unit 2035 may be independently provided.

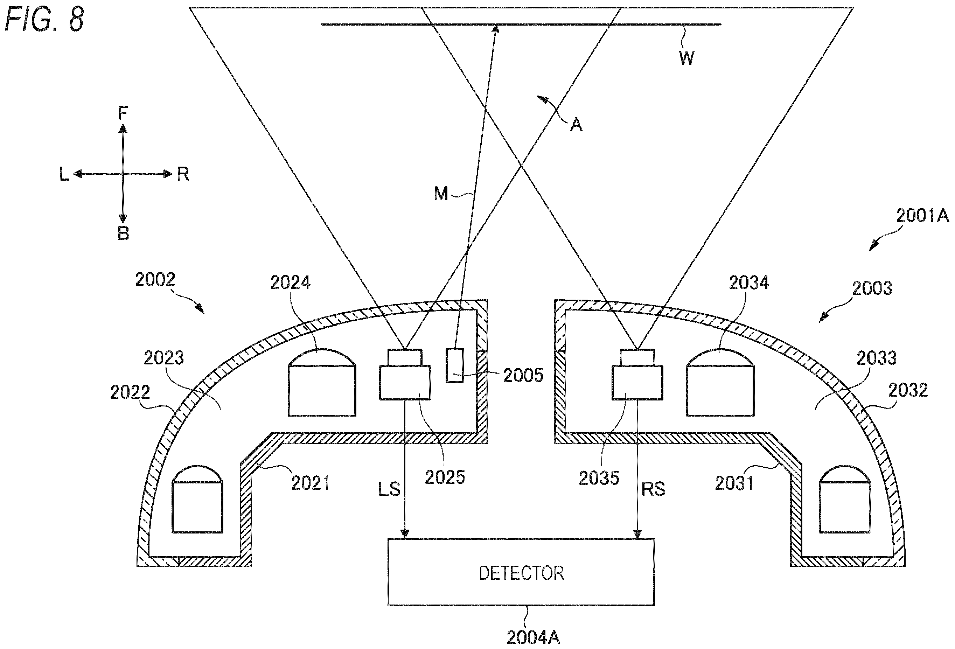

FIG. 8 schematically illustrates a configuration of a sensor system 2001A according to a fifth embodiment. The sensor system 2001A includes a left lamp device 2002, a right lamp device 2003, a detector 2004A, and a marking light source 2005. Components having substantially the same configurations and functions as those of the sensor system 2001 according to the fourth embodiment are denoted by the same reference symbols, and repetitive descriptions thereof will be omitted.

The marking light source 2005 is disposed in one of the left lamp chamber 2023 of the left lamp device 2002 and the right lamp chamber 2033 of the right lamp device 2003. In the illustrated example, the marking light source 2005 is disposed in the left lamp chamber 2023. The marking light source 2005 is configured to emit the marking light M into an area A where the field of view of the left camera unit 2025 and the field of view of the right camera unit 2035 overlap with each other.. Examples of the marking light source 2005 include a light emitting diode and a laser diode. The wavelength of the marking light M is determined as the wavelength at which the left camera unit 2025 and the right camera unit 2035 have sensitivity. The marking light M is an example of the reference light.

The detector 2004A can communicate with the left camera unit 2025 and the right camera unit 2035. The left image signal LS and the right image signal RS are inputted to the detector 2004A.

The detector 2004A includes a processor and a memory. Examples of the processor include a CPU and an MPU. The processor may include multiple processor cores. Examples of the memory include ROM and RAM. The ROM may store a program for executing the processing described above. The program may include an artificial intelligence program. Examples of the artificial intelligence program may include a learned neural network with deep learning. The processor designates at least a part of the program stored in the ROM, loads the program on the RAM, and executes predetermined processing in cooperation with the RAM. The detector 2004A may be implemented by an integrated circuit (hardware resource) such as an ASIC or an FPGA, or by a combination of the hardware resource and the above-mentioned processor and memory.

The detector 2004A is configured to detect the misalignment of the optical axis of the left camera unit 2025 based on the image of the marking light M in the left image LI acquired by the left camera unit 2025. The detector 2004A is configured to detect a misalignment of the optical axis of the right camera unit 2035 based on the image of the marking light M in the right image RI acquired by the right camera unit 2035.

Specifically, the marking light source 2005 emits the marking light M toward a wall W disposed in the area A where the field of view of the left camera unit 2025 and the field of view of the right camera unit 2035 overlap. The distance between the wall W and the left camera unit 2025 is determined in advance. An image of the marking light M is formed on the wall W. The image of the marking light M is included in the left image LI acquired by the left camera unit 2025 (see FIG. 7).

The positional relationship between the left camera unit 2025 and the marking light source 2005 is adjusted in advance. Accordingly, if the distance between the wall W and the left camera unit 2025 is known, the position of the image of the marking light M appearing in the left image LI can be specified. The dashed-line circle illustrated in the left image LI indicates the position at which the image of the marking light M shall appear.

As illustrated in the figure, when the position of the image of the marking light M deviates from the position where the marking light M shall appear, it is understood that the optical axis of the left camera unit 2025 is misaligned from the predetermined position or direction. Such a misalignment would occur when the left lamp device 2002 is mounted on the vehicle 100, or by a change in the position or posture of the left lamp device 2002 during the use of the vehicle 100. The detector 2004A detects the misalignment. The detection result is stored by the detector 2004A.

The detection result can be read as necessary by a maintenance worker or the like, and can be used for an operation of adjusting the position and attitude of the left lamp device 2002 with respect to the vehicle 100. Alternatively, the detection result may be used as correction information when the left image LI is processed without performing mechanical adjustment on the left lamp device 2002. For example, when a misalignment of the optical axis of the left camera unit 2025 is detected, correction corresponding to necessary adjustment is applied to the left image signal LS outputted from the left camera unit 2025, so that image processing is performed based on the corrected left image signal LS.

On the other hand, an image of the marking light M is included also in the right image RI acquired by the right camera unit 2035. If the positional relationship of the right camera unit 2035 with respect to the wall W and the marking light source 2005 is known, the position of the image of the marking light M appearing in the right image RI can be specified. The dashed-line circle illustrated in the right image RI indicates the position at which the image of the marking light M shall appear (see FIG. 7).

As illustrated in the figure, when the position of the image of the marking light M deviates from the position where it shall appear, it is understood that the optical axis of the right camera unit 2035 is misaligned from the predetermined position or direction. Such a misalignment would occur when the right lamp device 2003 is mounted on the vehicle 100, or by a change in the position or posture of the right lamp device 2003 during the use of the vehicle 100. The detector 2004A detects the misalignment. The detection result is stored by the detector 2004A.

The detection result can be read out as necessary by a maintenance worker or the like, and can be used for an operation of adjusting the position and attitude of the right lamp device 2003 with respect to the vehicle 100. Alternatively, the detection result may be used as correction information when the right image RI is processed without performing mechanical adjustment on the right lamp device 2003. For example, when a misalignment of the optical axis of the right camera unit 2035 is detected, correction corresponding to necessary adjustment is applied to the right image signal RS outputted from the right camera unit 2035, so that image processing is performed based on the corrected right image signal RS.

According to the configuration of the present embodiment, in addition to the advantages described with reference to the fourth embodiment, there is a merit that the number of light sources required for the marking can be minimized.

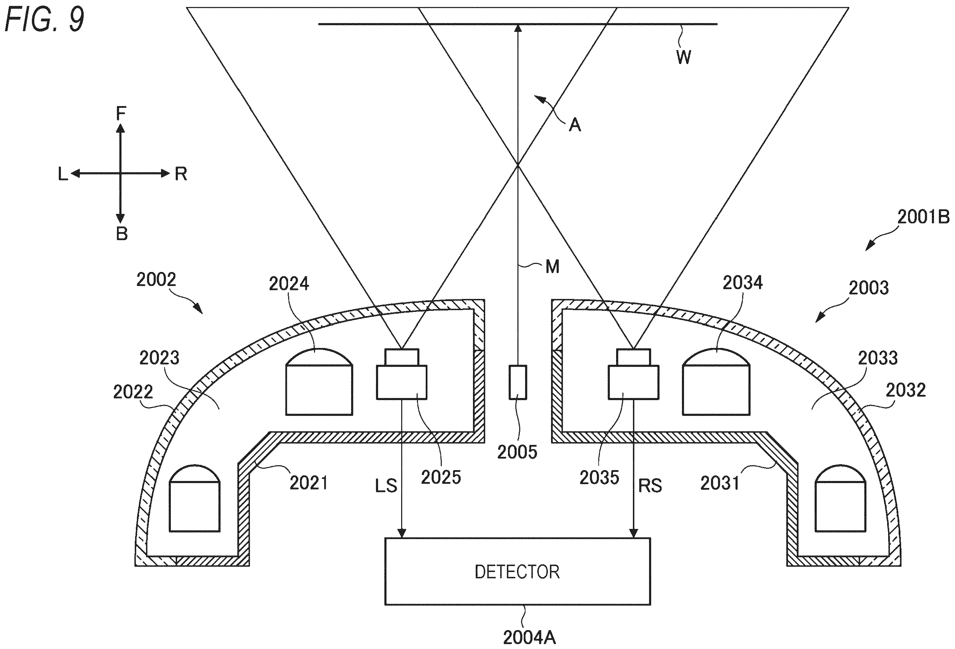

FIG. 9 schematically illustrates a configuration of a sensor system 2001B according to a sixth embodiment. Components having substantially the same configurations and functions as those of the sensor system 2001A according to the fifth embodiment are denoted by the same reference symbols, and repetitive descriptions thereof will be omitted.

In the present embodiment, the marking light source 2005 is fixed to the vehicle 100 on which the left lamp device 2002 and the right lamp device 2003 are mounted. That is, the left lamp unit 2002 and the right lamp device 2003 can be displaced relative to the marking light source 2005. In other words, the marking light source 2005 is supported at a position that can be displaced relative to the left lamp housing 2021 and the right lamp housing 2031.

Also in the present embodiment, the marking light source 2005 emits the marking light M toward a wall W disposed in an area A where the field of view of the left camera unit 2025 and the field of view of the right camera unit 2035 overlap. The image of the marking light M is included in the left image LI acquired by the left camera unit 2025 and in the right image RI acquired by the right camera unit 2035 (see FIG. 7).

If the respective positions of the left camera unit 2025 and the right camera unit 2035 with respect to the wall W and the marking light source 2005 are known, the positions of the images of the marking light M appearing in the left image LI and the right image RI can be specified. When the position of the image of the marking light M in the left image LI deviates from the position where it shall appear, it is understood that the optical axis of the left camera unit 2025 is misaligned from the predetermined position or direction. Similarly, when the position of the image of the marking light M in the right image RI deviates from the position where it shall appear, it is understood that the optical axis of the right camera unit 2035 is misaligned from the predetermined position or direction. Such a misalignment would occur when the left lamp device 2002 and the right lamp device 2003 are mounted on the vehicle 100, or by changes in the positions or postures of the left lamp device 2002 and the right lamp device 2003 during the use of the vehicle 100. The detector 2004A detects the misalignment. The detection result is stored by the detector 2004A.

The detection result can be read out as necessary by a maintenance worker or the like, and can be used for an operation of adjusting the positions and the attitudes of the left lamp device 2002 and the right lamp device 2003 with respect to the vehicle 100. Alternatively, the detection result may be used as correction information when the left image LI and the right image RI are processed without performing mechanical adjustments on the left lamp device 2002 and the right lamp device 2003. For example, when a misalignment of the optical axis of the left camera unit 2025 is detected, correction corresponding to necessary adjustment is applied to the left image signal LS outputted from the left camera unit 2025, so that image processing is performed based on the corrected left image signal LS. When a misalignment of the optical axis of the right camera unit 2035 is detected, correction corresponding to necessary adjustment is applied to the right image signal RS outputted from the right camera unit 2035, so that image processing is performed based on the corrected right image signal RS.

According to the configuration of the present embodiment, in addition to the advantages described with reference to the fourth embodiment and the fifth embodiment, there is a merit that the camera unit and the marking light source in each lamp chamber need not to be positioned with respect to each other in advance.

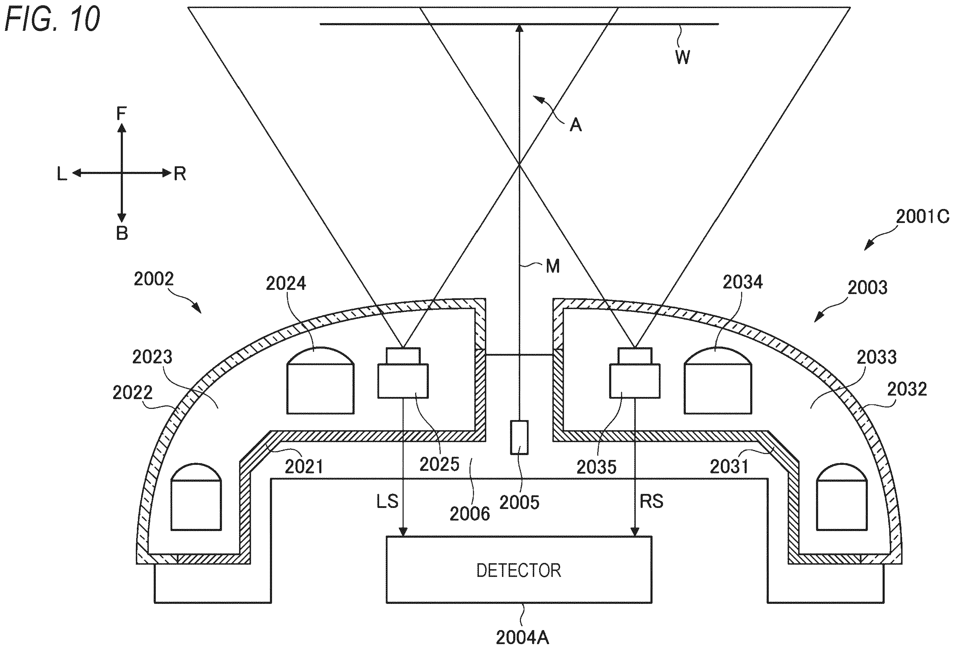

FIG. 10 schematically illustrates a configuration of a sensor system 2001C according to a seventh embodiment. Components having substantially the same configurations and functions as those of the sensor system 2001B according to the sixth embodiment are denoted by the same reference symbols, and repetitive descriptions thereof will be omitted.

The sensor system 2001C includes a support 2006. The support 2006 supports both the left lamp housing 2021 of the left lamp device 2002 and the right lamp housing 2031 of the right lamp device 2003. The support 2006 is attached to the vehicle 100. As a result, the positions of the left lamp unit 2002 and the right lamp device 2003 with respect to the vehicle 100 are collectively determined. The marking light source 2005 is supported by the support 2006.

Also in the present embodiment, the marking light source 2005 emits the marking light M toward a wall W disposed in an area A where the field of view of the left camera unit 2025 and the field of view of the right camera unit 2035 overlap. The image of the marking light M is included in the left image LI acquired by the left camera unit 2025 and in the right image RI acquired by the right camera unit 2035 (see FIG. 7).

The detector 2004A detects a misalignment of at least one of the optical axis of the left camera unit 2025 and the optical axis of the right camera unit 2035 based on at least one of the image of the marking light M in the left image LI acquired by the left camera unit 2025 and the image of the marking light M in the right image RI acquired by the right camera unit 2035.

According to the configuration of the present embodiment, in addition to the advantages described with reference to the fourth embodiment and the fifth embodiment, there is a merit that it is possible to suppress the misalignment of the optical axes of the left camera unit 2025 and the right camera unit 2035 caused by the relative displacement between the left lamp housing 2021 and the right lamp housing 2031.

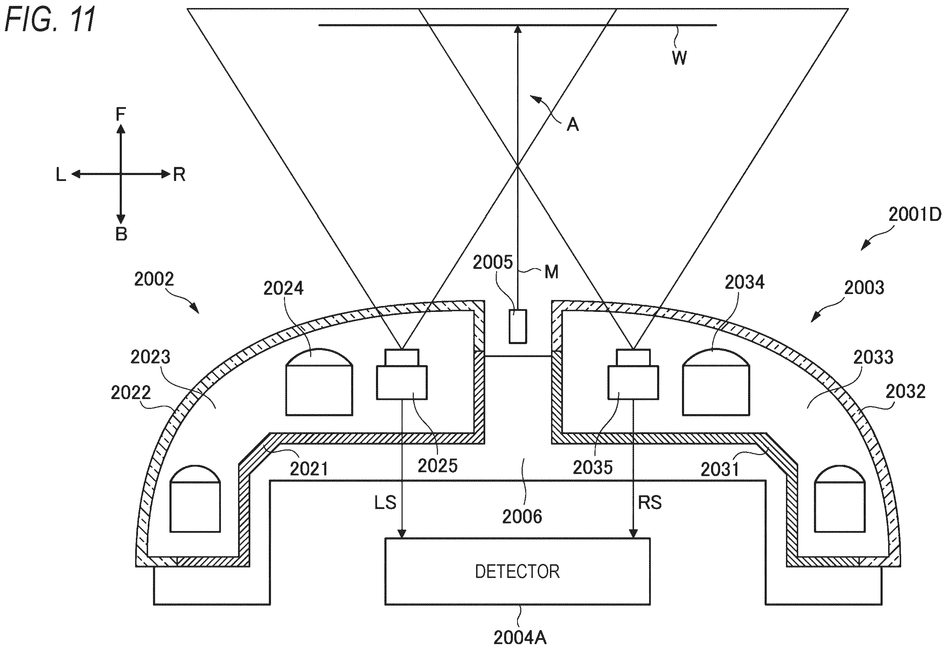

FIG. 11 schematically illustrates a configuration of a sensor system 2001D according to an eighth embodiment. Components having substantially the same configurations and functions as those of the sensor system 2001C according to the seventh embodiment are denoted by the same reference symbols, and repetitive descriptions thereof will be omitted.

In the present embodiment, the marking light source 2005 is fixed to the vehicle 100 on which the support 2006 is mounted. That is, the left lamp unit 2002 and the right lamp device 2003 can be displaced relative to the marking light source 2005. In other words, the marking light source 2005 is supported at a position that can be displaced relative to the left lamp housing 2021 and the right lamp housing 2031.

Also in the present embodiment, the marking light source 2005 emits the marking light M toward a wall W disposed in an area A where the field of view of the left camera unit 2025 and the field of view of the right camera unit 2035 overlap. The image of the marking light M is included in the left image LI acquired by the left camera unit 2025 and in the right image RI acquired by the right camera unit 2035 (see FIG. 7).

The detector 2004A detects a misalignment of at least one of the optical axis of the left camera unit 2025 and the optical axis of the right camera unit 2035 based on at least one of the image of the marking light M in the left image LI acquired by the left camera unit 2025 and the image of the marking light M in the right image RI acquired by the right camera unit 2035.

According to the configuration of the present embodiment, in addition to the advantages described with reference to the fourth embodiment, the fifth embodiment, and the seventh embodiment, there is a merit that the marking light source 2005 supported by the support 2006 and each camera unit need not to be positioned with respect to each other in advance.

The fourth to eighth embodiments described above are mere examples to facilitate understanding of the presently disclosed subject matter. The configurations according to the fourth embodiment to the eighth embodiment can be appropriately modified without departing from the gist of the presently disclosed subject matter.

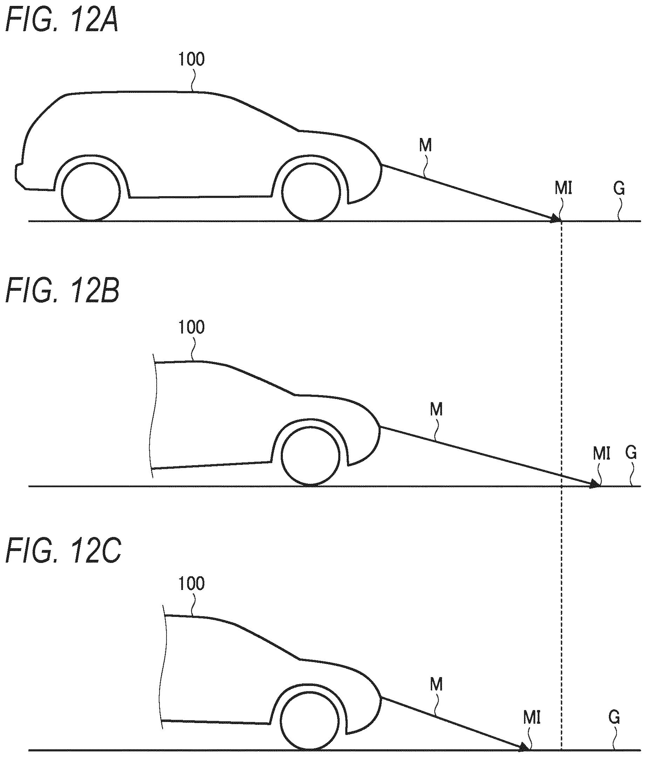

In each of the fifth to eighth embodiments, the marking light M irradiates the wall W disposed ahead of the left lamp device 2002 and the right lamp device 2003. However, the marking light M may irradiate a road surface G as illustrated in FIG. 12A as long as it is the area A where the field of view of the left camera unit 2025 and the field of view of the right camera unit 2035 overlap with each other.

In this case, the marking light M can be used to detect the pitching of the vehicle 100. The distance to a projected image MI of the marking light M on the road surface G is measured by the left camera unit 2025 and the right camera unit 2035. FIG. 12A illustrates a case where the pitch angle of the vehicle 100 is zero. By storing the distance as a predetermined value, the pitching of the vehicle 100 can be detected from the change of the distance. As illustrated in FIG. 12B, when the distance to the projected image MI is longer than the predetermined value, it is understood that the vehicle 100 pitches upward. As illustrated in FIG. 12C, when the distance to the projected image MI is shorter than the predetermined value, it is understood that the vehicle 100 pitches downward.

As described above, the term "left lamp housing" means the lamp housing located on the left of the right lamp housing when viewed from the vehicle cabin. As used herein, the term "right lamp housing" means a lamp housing located on the right of the left lamp housing when viewed from the vehicle cabin.

Thus, as long as a stereo camera system is established, the left lamp housing need not be disposed in the left portion of the vehicle 100, and the right lamp housing need not be disposed in the right portion of the vehicle 100. For example, the left ramp device 2002 may be disposed in the right rear corner portion RB of the vehicle 100 illustrated in FIG. 2. In this case, the right ramp device 2003 may be disposed in the left rear corner portion LB of the vehicle 100. Alternatively, the left ramp unit 2002 may be disposed in the left rear corner portion LB of the vehicle 100. In this case, the right ramp device 2003 may be disposed in the left front corner portion LF of the vehicle 100.

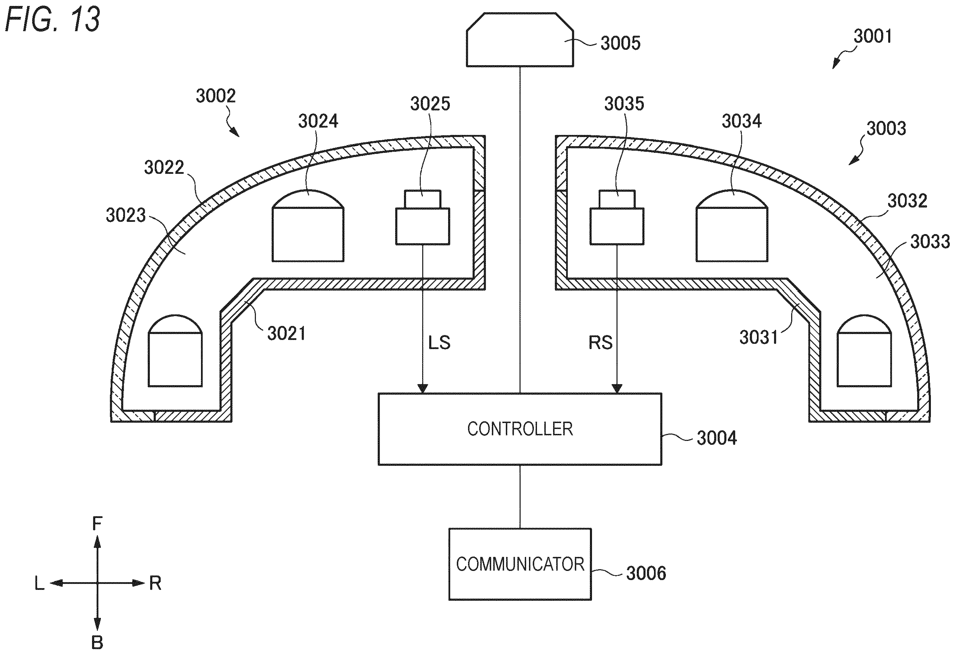

FIG. 13 schematically illustrates a configuration of a sensor system 3001 according to a ninth embodiment. The sensor system 3001 includes a left lamp device 3002, a right lamp device 3003, and a controller 3004.

The left lamp device 3002 is mounted on the left front corner portion LF of the vehicle 100 illustrated in FIG. 2. The right lamp device 3003 is mounted on the right front corner portion RF of the vehicle 100. The controller 3004 is disposed at an appropriate position in the vehicle 100.

As illustrated in FIG. 13, the left lamp device 3002 includes a left lamp housing 3021 and a left translucent cover 3022. The left translucent cover 3022 forms a part of the outer surface of the vehicle 100. The left translucent cover 3022 and the left lamp housing 3021 define a left lamp chamber 3023. That is, the left lamp housing 3021 defines a part of the left lamp chamber 3023.

The left lamp device 3002 includes a left lamp unit 3024. The left lamp unit 3024 is a lamp that emits light toward at least an area ahead of the vehicle 100. The left lamp unit 3024 is, for example, a headlamp.

The left lamp device 3002 includes a left camera unit 3025. The left camera unit 3025 is accommodated in the left lamp chamber 3023. The left camera unit 3025 captures an image of an outside area of the vehicle 100 included in the angle of view (a left image), and outputs a left image signal LS corresponding to the left image.

The right lamp device 3003 includes a right lamp housing 3031 and a right translucent cover 3032. The right translucent cover 3032 forms a part of the outer surface of the vehicle 100. The right translucent cover 3032 and the right lamp housing 3031 define a right lamp chamber 3033. That is, the right lamp housing 3031 defines a part of the right lamp chamber 3033.

The right lamp device 3003 includes a right lamp unit 3034. The right lamp unit 3034 is a lamp that emits light toward at least an area ahead of the vehicle 100. The right lamp unit 3034 is, for example, a headlamp.

The right lamp device 3003 includes a right camera unit 3035. The right camera unit 3035 is accommodated in the right lamp chamber 3033. The right camera unit 3035 captures an image of an outside area of the vehicle 100 included in the angle of view (a right image), and outputs a right image signal RS corresponding to the right image.

The field of view of the left camera unit 3025 and the field of view of the right camera unit 3035 partially overlap. Therefore, the left camera unit 3025 and the right camera unit 3035 constitute a stereo camera system.

The controller 3004 can communicate with the left camera unit 3025 and the right camera unit 3035. The left image signal LS and the right image signal RS are inputted to the controller 3004.

The controller 3004 includes a processor and a memory. Examples of the processor include a CPU and an MPU. The processor may include multiple processor cores. Examples of the memory include ROM and RAM. The ROM may store a program for executing the processing described above. The program may include an artificial intelligence program. Examples of the artificial intelligence program may include a learned neural network with deep learning. The processor may designate at least a part of the program stored in the ROM, load the program on the RAM, and execute the processing described above in cooperation with the RAM. The controller 3004 may be implemented by an integrated circuit (hardware resource) such as an ASIC or an FPGA, or by a combination of the hardware resource and the above-mentioned processor and memory.

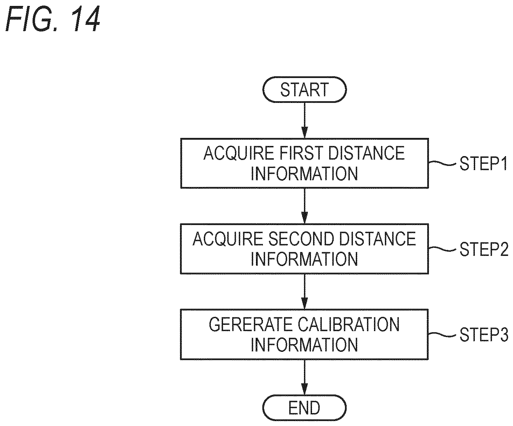

FIG. 14 illustrates a first example of processing executed by the controller 3004.

The controller 3004 acquires first distance information corresponding to the distance to an object based on the left image captured by the left camera unit 3025 and the right image captured by the right camera unit 3035 (STEP1). Examples of the object include a target for calibration placed in an area ahead of the vehicle 100. Since the method of distance measurement by a stereo camera using a matching technique per se is well known, detailed descriptions thereof will be omitted.

Next, the controller 3004 compares the acquired first distance information with second distance information (STEP2). The second distance information is information corresponding to the distance to the object acquired independently of the left camera unit 3025 and the right camera unit 3035. For example, when the distance to the target for calibration is determined in advance, the controller 3004 may store the second distance information in advance.

Next, the controller 3004 generates calibration information for calibrating at least one of the left camera unit 3025 and the right camera unit 3035 based on the comparison result of the first distance information and the second distance information (STEP3).

In some cases, the first distance information and the second distance information do not coincide with each other. This would be caused by a deviation from a predetermined position or orientation of at least one of the optical axes of the left camera unit 3025 and the right camera unit 3035. Such a deviation would occur when the left lamp device 3002 and the right lamp device 3003 are mounted on the vehicle 100, or a change over time in the position and attitude of the optical axis during the use of the vehicle 100.

The calibration information is generated as an adjustment amount necessary to match the first distance information with the second distance information. The calibration information is stored by the controller 3004. The calibration information may be read as necessary by a maintenance worker or the like, and may be used for calibrating operations of the left camera unit 3025 and the right camera unit 3035. Alternatively, the correction information may be used when the distance measurement processing is performed by the controller 3004 without performing mechanical calibration on the left camera unit 3025 and the right camera unit 3035. For example, when information indicating necessity of the calibration is obtained in the left camera unit 3025, correction corresponding to the necessary calibration is added to the left image signal LS outputted from the left camera unit 3025, so that distance measurement processing is performed based on the corrected left image signal LS. As a result, it is possible to suppress degradation in the information acquisition capability of the sensor system 3001 including the stereo camera system.

As illustrated in FIG. 13, the sensor system 3001 includes a sensor unit 3005. The sensor unit 3005 includes a sensor capable of detecting a distance to an object located in an outside area of the vehicle 100. Examples of such a sensor include a LiDAR sensor and a millimeter-wave radar.

The second distance information may be acquired by the sensor unit 3005. That is, the distance measurement using the left camera unit 3025 and the right camera unit 3035 as well as the distance measurement using the sensor unit 3005 are performed for the same object located in the outside area of the vehicle 100 to compare both distance measurement results. The generation of the calibration information based on the comparison result is the same as in the above-described example.

According to such a configuration, it is unnecessary to store the information on the distance to the object in advance. Therefore, it is possible to enhance the degree of freedom regarding the selection of the object to be used for the generation of the calibration information and the timing of the generation of the calibration information.

As illustrated in FIG. 13, the sensor system 3001 includes a communicator 3006. The communicator 3006 is configured to be able to communicate with the controller 3004. The communication may be performed electrically or optically via a wired connection or contactless via wireless communication. The controller 3004 is configured to output a control signal to the communicator 3006 at a predetermined timing, . The communicator 3006 is configured to acquire infrastructure information in response to the control signal. The communicator 3006 is configured to output the acquired infrastructure information to the controller 3004.

The infrastructure information may include at least one of information about roads and information about buildings on roads. Examples of the information about roads include the number of lanes, the existence of intersections, the existence of crossing sideways, the existence of entrances and exits of expressways, and the existence of curves. Examples of the buildings include traffic lights, curve mirrors, sidewalk bridges, bus stops, toll gates on toll roads.

The second distance information may be acquired from the communicator 3006. That is, the distance measurement using the left camera unit 3025 and the right camera unit 3035 is performed on an object whose distance can be specified by referring to the infrastructure information. The first distance information obtained from the measurement result is compared with the second distance information obtained from the infrastructure information. The generation of the calibration information based on the comparison result is the same as in the above-described example.

Even with such a configuration, it is unnecessary to store the information on the distance to the object in advance. Therefore, it is possible to enhance the degree of freedom regarding the selection of the object to be used for the generation of the calibration information and the timing of the generation of the calibration information.

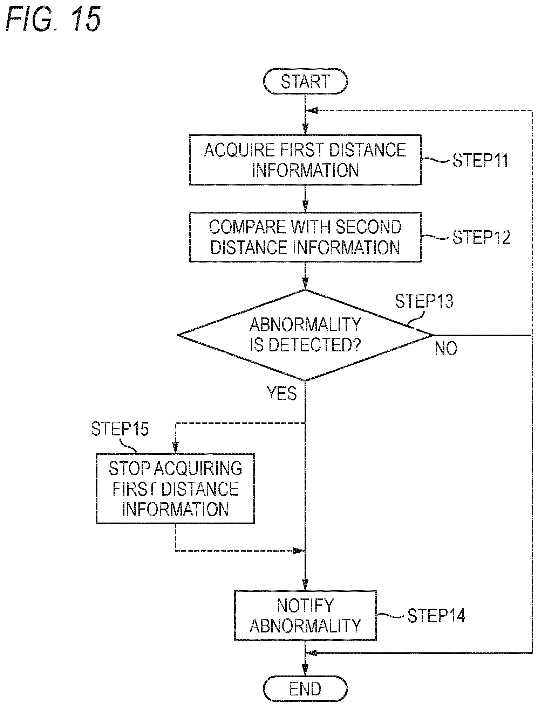

FIG. 15 illustrates a second example of processing executed by the controller 3004.

The controller 3004 acquires the first distance information corresponding to the distance to the object based on the left image acquired by the left camera unit 3025 and the right image acquired by the right camera unit 3035 (STEP11). Examples of the object include a target for abnormality detection placed in an area ahead of the vehicle 100. Since the method of distance measurement by a stereo camera using a matching technique per se is well known, detailed descriptions thereof will be omitted.

Next, the controller 3004 compares the acquired first distance information with the second distance information (STEP12). The second distance information is information corresponding to the distance to the object acquired independently of the left camera unit 3025 and the right camera unit 3035. For example, when the distance to the target for abnormality detection is determined in advance, the controller 3004 may store the second distance information in advance.

Next, the controller 3004 determines whether or not at least one of the left camera unit 3025 and the right camera unit 3035 is abnormal based on the comparison result of the first distance information and the second distance information (STEP13). For example, when the difference between the distance to the object indicated by the first distance information and the distance to the object indicated by the second distance information exceeds a predetermined threshold value, it is determined that at least one of the left camera unit 3025 and the right camera unit 3035 is abnormal (Y in STEP13). If it is determined that there are no abnormalities (N in STEP13), the processing is finished.

Examples of the cause of the abnormality include a failure of at least one of the left camera unit 3025 and the right camera unit 3035, scratches or dirt on the left translucent cover 3022 included in at least the field of view of the left camera unit 3025 related to distance measurement, scratches or dirt on the right translucent cover 3032 included in at least the field of view of the right camera unit 3035 related to distance measurement.

Next, the controller 3004 notifies of the anomaly (STEP14). The notification is performed through at least one of visual notification, auditory notification, and haptic notification. Only the fact that there is an abnormality in either the left camera unit 3025 or the right camera unit 3035 may be notified, or the camera unit that causes the abnormality may be specified and notified.

The camera unit that makes the first distance information abnormal can be specified by comparing the information on the distance from each camera unit used for the distance measurement to the object with the information on the distance from each camera unit estimated by the second distance information to the object.

Additionally or alternatively, the camera unit that makes the first distance information abnormal can be specified by performing image recognition processing on the left image acquired by the left camera unit 3025 and the right image acquired by the right camera unit 3035 to determine whether there are any blurred spots due to scratches or dirt or any defects due to failure in the image.

The user who has received the notification can clean the transparent cover or perform maintenance and inspection of the camera unit in order to solve the abnormality. As a result, it is possible to suppress degradation in the information acquisition capability of the sensor system 3001 including the stereo camera system.

The second distance information may be acquired by the sensor unit 3005. That is, the distance measurement using the left camera unit 3025 and the right camera unit 3035 as well as the distance measurement using the sensor unit 3005 are performed for the same object located in the outside area of the vehicle 100 to compare both distance measurement results. The detection of the abnormality based on the comparison result is the same as in the above-mentioned example.

According to such a configuration, it is unnecessary to store the information on the distance to the object in advance. Therefore, it is possible to enhance the degree of freedom regarding the selection of the object to be used for the abnormality detection and the timing of the abnormality detection. For example, as indicated by dashed lines in FIG. 15, in a case where no anomaly is detected (N in STEP13), the processing may be repeated cyclically instead of finishing the processing.

The second distance information may be acquired from the communicator 3006. That is, the distance measurement using the left camera unit 3025 and the right camera unit 3035 is performed on an object whose distance can be specified by referring to the infrastructure information. The first distance information obtained from the measurement result is compared with the second distance information obtained from the infrastructure information. The abnormality detection based on the comparison result is the same as in the above-mentioned example.

Even with such a configuration, it is unnecessary to store the information on the distance to the object in advance. Therefore, it is possible to enhance the degree of freedom regarding the selection of the object to be used for the generation of the calibration information and the timing of the generation of the calibration information. For example, as indicated by dashed lines in FIG. 15, the processing may be repeated each time the infrastructure information is acquired, instead of finishing the processing in a case where no abnormality is detected (N in STEP13).

As indicated by dashed lines in FIG. 15, in a case where it is determined that at least one of the left camera unit 3025 and the right camera unit 3035 is abnormal (Y in STEP13), the acquisition of the first distance information may be stopped (STEP15). At this time, it is continued the processing for recognizing the object based on the image acquired from the camera unit that has been determined so as to have no abnormality. That is, only the distance measurement using the stereo camera system is disabled.

According to such a configuration, even when at least one of the left camera unit 3025 and the right camera unit 3035 has an abnormality, it is possible to minimize degradation in the information acquisition capability of the sensor system 3001.

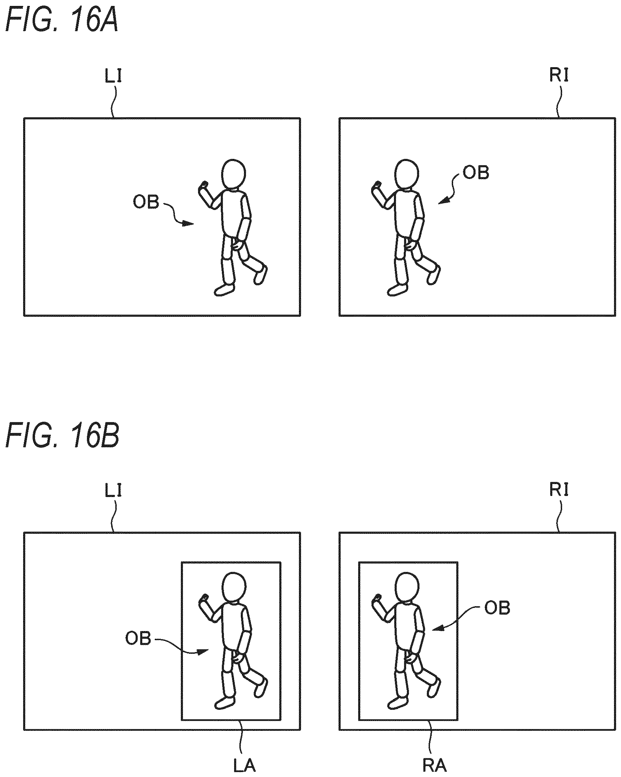

Next, a third example of the processing executed by the controller 3004 will be described with reference to FIGS. 16A and 16B. FIG. 16A illustrates the left image LI acquired by the left camera unit 3025 and the right image RI acquired by the right camera unit 3035. Both the left image LI and the right image RI include an object OB located in an outside area of the vehicle 100.

In order to measure the distance to the object OB, it is necessary to specify the parallax between the left camera unit 3025 and the right camera unit 3035 with respect to the object OB. In order to acquire the parallax, it is necessary to specify the position of the image of the object OB in each of the left image LI and the right image RI. The position of the object OB is specified by comparing the value of the pixel included in the left image LI and the value of the pixel included in the right image RI, and specifying a set of pixels having similar values. A set of pixels having similar values corresponds to the image of the object OB. This image processing is referred to as block matching.

In this example, the controller 3004 is configured to narrow the ranges of the left image LI and the right image RI including the object OB that are to be processed, based on the information on the position of the object OB specified by the sensor unit 3005.

Specifically, by specifying the position of the object OB with respect to the vehicle 100 by the sensor unit 3005, the position of the object OB in the left image LI acquired by the left camera unit 3025 can be roughly estimated. Similarly, the position of the object OB in the right image RI acquired by the right camera unit 3035 may be roughly estimated.

An area LA in FIG. 16B corresponds to a position where the object OB may be present in the left image LI estimated as such. Similarly, an area RA corresponds to a position where the object OB may be present in the right image RI estimated as such. In this case, the controller 3004 performs the above-described block matching only on the area LA and the area RA.

According to such a configuration, it is possible to reduce the processing load and enhance the processing speed as compared with the case where image processing is performed on the entire left image LI and the entire right image RI. Therefore, it is possible to suppress degradation in the information processing capability of the sensor system including the stereo camera system.

The ninth embodiment is a mere example for facilitating understanding of the gist of the presently disclosed subject matter. The configuration according to the ninth embodiment can be appropriately modified without departing from the gist of the presently disclosed subject matter.

In the ninth embodiment, the controller 3004 is disposed in the vehicle 100 on which the left lamp device 3002 and the right lamp device 3003 are mounted. However, the controller 3004 may be mounted on either the left lamp device 3002 or the right lamp device 3003.

In the above embodiment, the left camera unit 3025 is accommodated in the left lamp chamber 3023 of the left lamp device 3002, and the right camera unit 3035 is accommodated in the right lamp chamber 3033 of the right lamp device 3003. The merit of configuring the stereo camera system with the left camera unit 3025 and the right camera unit 3035 is that a longer base line length (distance between the optical axes of the two cameras) can be easily secured in comparison with the stereo camera system installed in the vicinity of the room mirror in the vehicle cabin. As a result, the distant visual recognition capability is enhanced. Further, since the stereo camera system is removed from the vicinity of the room mirror, the field of view of the driver is expanded.

However, the left camera unit 3025 and the right camera unit 3035 may be disposed at appropriate positions outside the vehicle cabin of the vehicle 100. By arranging the camera unit outside the vehicle cabin, a long base line length can be secured, while each camera unit is made susceptible to heat and vibration. However, it is possible to suppress degradation in the information processing capability of the stereo camera system through the generation of the calibration information and the abnormality detection described above.

As described above, the term "left camera unit" means a camera unit which is located on the left of the right camera unit when viewed from the vehicle cabin. As used herein, the term "right camera unit" means a camera unit located on the right of the left camera unit when viewed from the vehicle cabin.

Thus, as long as the stereo camera system is established, the left camera unit 3025 need not be disposed on the left portion of the vehicle 100, and the right camera unit 3035 need not be disposed on the right portion of the vehicle 100. For example, the left camera unit 3025 may be disposed in the right rear corner portion RB of the vehicle 100 illustrated in FIG. 2. In this case, the right camera unit 3035 may be disposed in the left rear corner portion LB of the vehicle 100. Alternatively, the left camera unit 3025 may be disposed in the left rear corner portion LB of the vehicle 100. In this case, the right camera unit 3035 may be disposed in the left front corner portion LF of the vehicle 100.

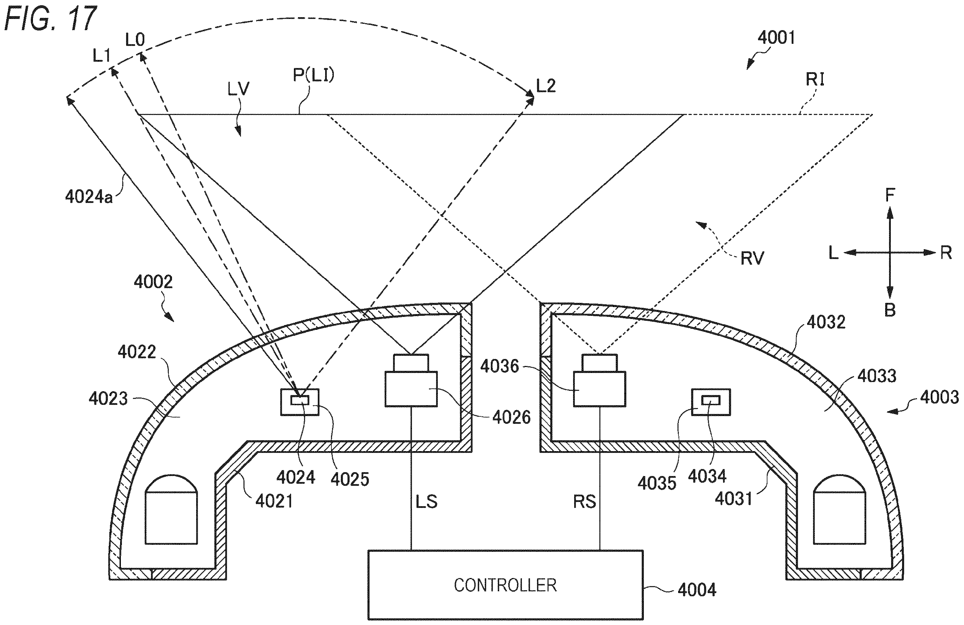

FIG. 17 schematically illustrates a configuration of a sensor system 4001 according to a tenth embodiment. The sensor system 4001 includes a left lamp device 4002 and a right lamp device 4003.

The left lamp device 4002 is mounted on the left front corner portion LF of the vehicle 100 illustrated in FIG. 2. The right lamp device 4003 is mounted on the right front corner portion RF of the vehicle 100.

As illustrated in FIG. 17, the left lamp device 4002 includes a left lamp housing 4021 and a left translucent cover 4022. The left translucent cover 4022 forms a part of the outer surface of the vehicle 100. The left translucent cover 4022 and the left lamp housing 4021 define a left lamp chamber 4023. That is, the left lamp housing 4021 defines a part of the left lamp chamber 4023.

The left lamp device 4002 includes a left light source 4024. The left light source 4024 emits light having a predetermined wavelength toward at least an area ahead of the vehicle 100. Examples of the left light source 4024 include a light emitting diode and a laser diode. The left light source 4024 is used as a light source of a headlamp or a marking lamp, for example. The left light source 4024 is accommodated in the left lamp chamber 4023.

The left lamp device 4002 includes a left scanner 4025. The left scanner 4025 is a mechanism for cyclically changing the irradiating direction of the light emitted from the left light source 4024. Examples of the left scanner 4025 include a polygon mirror mechanism or a blade scanning mechanism that cyclically changes the reflecting direction of light emitted from the left light source 4024, and a MEMS mechanism that cyclically changes the attitude of a member that supports the left light source 4024. The left scanner 4025 is accommodated in the left lamp chamber 4023.

The left lamp device 4002 includes a left camera unit 4026. The left camera unit 4026 is accommodated in the left lamp chamber 4023. The left camera unit 4026 captures an image of an outside area of the vehicle 100 included in the field of view (a left image LI), and outputs a left image signal LS corresponding to the left image LI.

The acquisition of the left image LI is performed cyclically. Specifically, the shutter of the left camera unit 4026 is opened for a predetermined time period at a predetermined cycle. The time period for which the shutter is opened corresponds to the exposure time required to acquire the left image LI. The shutter may be a mechanical shutter or an electronic shutter.

The right lamp device 4003 includes a right lamp housing 4031 and a right translucent cover 4032. The right translucent cover 4032 forms a part of the outer surface of the vehicle 100. The right translucent cover 4032 and the right lamp housing 4031 define a right lamp chamber 4033. That is, the right lamp housing 4031 defines a part of the right lamp chamber 4033.

The right lamp device 4003 includes a right light source 4034. The right light source 4034 emits light having a predetermined wavelength toward at least an area ahead of the vehicle 100. Examples of the right light source 4034 include a light emitting diode and a laser diode. The right light source 4034 is used as a light source of a headlamp or a marking lamp, for example. The right light source 4034 is accommodated in the right lamp chamber 4033.

The right lamp device 4003 includes a right scanner 4035. The right scanner 4035 is a mechanism for cyclically changing the irradiating direction of the light emitted from the right light source 4034. Examples of the right scanner 4035 include a polygon mirror mechanism or a blade scanning mechanism that cyclically changes the reflecting direction of light emitted from the right light source 4034, and a MEMS mechanism that cyclically changes the attitude of a member that supports the right light source 4034. The right scanner 4035 is accommodated in the right lamp chamber 4033.

The right lamp device 4003 includes a right camera unit 4036. The right camera unit 4036 is accommodated in the right lamp chamber 4033. The right camera unit 4036 captures an image of an outside area of the vehicle 100 included in the field of view (a right image RI), and outputs a right image signal RS corresponding to the right image RI.

The right image RI is acquired cyclically. Specifically, the shutter of the right camera unit 4036 is opened for a predetermined time period at a predetermined cycle. The time period for which the shutter is opened corresponds to the exposure time required to acquire the right image RI. The shutter may be a mechanical shutter or an electronic shutter

The field of view LV of the left camera unit 4026 and the field of view RV of the right camera unit 4036 partially overlap. Accordingly, the left camera unit 4026 and the right camera unit 4036 constitute a stereo camera system.

The sensor system 4001 includes a controller 4004. The controller 4004 can communicate with the left camera unit 4026 and the right camera unit 4036. The left image signal LS and the right image signal RS are inputted to the controller 4004.

The controller 4004 includes a processor and a memory. Examples of the processor include a CPU and an MPU. The processor may include multiple processor cores. Examples of the memory include ROM and RAM. The ROM may store a program for executing the processing described above. The program may include an artificial intelligence program. Examples of the artificial intelligence program may include a learned neural network with deep learning. The processor may designate at least a part of the program stored in the ROM, load the program on the RAM, and execute the processing described above in cooperation with the RAM. The controller 4004 may be implemented by an integrated circuit (hardware resource) such as an ASIC or an FPGA, or by a combination of the hardware resource and the above-mentioned processor and memory.

The light 4024a emitted from the left light source 4024 cyclically moves within the field of view LV of the left camera unit 4026. A straight line P indicates a projection plane corresponding to the left image LI. Specifically, when the light 4024a is irradiated in a direction L1, the light 4024a enters the field of view LV of the left camera unit 4026. That is, when the irradiating direction of the light 4024a is within a range between directions L1 and L2, an image of the light 4024a may be included in left image LI.

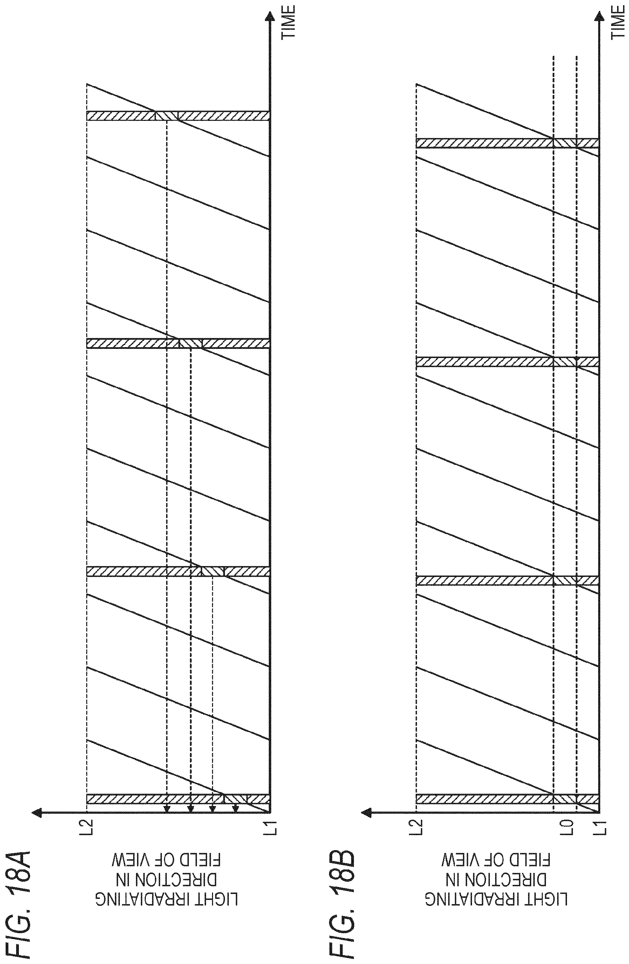

FIG. 18A illustrates a temporal change in the irradiating direction of the light 4024a by the left scanner 4025. In the figure, a hatched rectangular area represents a time period during which the left camera unit 4026 acquires the left image LI, that is, an exposure period during which the shutter of the left camera unit 4026 is opened.

In the figure, the cycle in which the irradiating direction of the light 4024a is changed by the left scanner 4025 does not coincide with the cycle in which the left image LI is acquired by the left camera unit 4026. Therefore, the position at which the light 4024a intersects the projection plane P changes every time the left image LI is acquired. That is, the position of the image of the light 4024a included in the left image LI changes every time the left image LI is acquired. If the image of the light 4024a overlaps with another image that is included in the left image LI to be recognized, there would be a case where the required image recognition processing is hindered.

The controller 4004 according to the present embodiment is configured to match a time point at which the light 4024a is irradiated in a reference direction by the left scanner 4025 with a reference time point within the exposure period for acquiring the left image LI. Specifically, a time point at which the light 4024a is irradiated in a reference direction L0 illustrated in FIG. 17 is detected, so that the left image LI is acquired by the left camera unit 4026 with reference to this time point. For example, the time point at which the light 4024a is irradiated in the direction L0 can be detected by detecting the rotation amount of the motor for driving the left scanner 4025 by an encoder or the like. The signal generated upon this detection may trigger the acquisition of the left image LI by the left camera unit 4026.

As a result, as illustrated in FIG. 18B, the cycle in which the irradiating direction of the light 4024a is changed by the left scanner 4025 coincides with the cycle in which the left image LI is acquired by the left camera unit 4026. Therefore, the position at which the light 4024a intersects the projection plane P does not change at every acquisition timing of the left image LI. That is, the position of the image of the light 4024a included in the left image LI is made constant.

This makes it easy to remove the influence of the image of the light 4024a on the image recognition. For example, it is possible to perform processing such as excluding a specific area in which the light 4024a appears from an image recognition target, so that it is possible to suppress an increase in the load of the image recognition processing performed using the left image LI. As a result, it is possible to suppress degradation in the information acquisition capability of the sensor system 4001 including the left camera unit 4026 used together with the left scanner 4025 that cyclically changes the irradiating direction of the light 4024a emitted from the left light source 4024 .

As illustrated in FIG. 17, the reference direction L0 is a direction corresponding to the left end of the left image LI. Therefore, the image of the light 4024a always appears at the left end of the left image LI.

The field of view of the left camera unit 4026 is typically designed so that an object required to be recognized is located at the center of the field of view. In other words, the information contained at the end of the field of view of the left camera unit 4026 tends to be less important than the information contained at the center of the field of view. By making the image of the light 4024a always appear at such a position, the influence of the light image on image recognition can be further suppressed.

The controller 4004 may be configured to determine an abnormality of the left scanner 4025 based on the position of the image of the light 4024a included in the left image LI. Specifically, the position of the image of the light 4024a included in the left image LI is detected at a predetermined timing. Examples of the predetermined timing include every time the left image LI is acquired, every time a predetermined time elapses, and at a timing where an instruction is inputted by a user.

If the left scanner 4025 operates normally, the position of the image of the light 4024a appearing in the left image LI is constant. Therefore, when the position of the image of the light 4024a deviates from the predetermined position, it can be determined that there is some abnormality in the left scanner 4025. Therefore, the light 4024a emitted from the left light source 4024 can also be used for detecting an abnormality in the left scanner 4025.

The controller 4004 may also be configured to specify the position of the image of the light 4024a included in the left image LI based on information corresponding to the irradiating direction of the light 4024a and information corresponding to the exposure period for acquiring the left image LI.

In FIG. 18A, if the cycle in which the irradiating direction of the light 4024a changes by the left scanner 4025 and the cycle in which the left image LI is acquired by the left camera unit 4026 are known, the irradiating direction of the light 4024a at the time of a specific exposure operation can be specified by counting, for example, the number of scanning operations by the left scanner 4025 and the number of exposure operations by the left camera unit 4026. As a result, the position of the image of the light 4024a in the acquired left image LI can be specified.

According to such a configuration, it is possible to perform image recognition processing based on prediction of an area in which an image of the light 4024a appears. Therefore, it is possible to suppress degradation in the information acquisition capability of the sensor system 4001 including the left camera unit 4026 used together with the left scanner 4025 that cyclically changes the irradiating direction of the light 4024a emitted from the left light source 4024 .

Also in this case, the controller 4004 may be configured to determine the abnormality of the left scanner 4025 based on the position of the image of the light 4024a included in the left image LI. If the left scanner 4025 operates normally, the position of the image of the light 4024a appearing in the left image LI can be predicted. Therefore, if the position of the image of the light 4024a deviates from the predicted position, it can be determined that there is any abnormality in the left scanner 4025. Therefore, the light 4024a emitted from the left light source 4024 can also be used for detecting an abnormality in the left scanner 4025.

The above description with reference to FIGS. 18A and 18B can be similarly applied to the right lamp device 4003 including the right light source 4034, the right scanner 4035, and the right camera unit 4036. That is, it is possible to suppress an increase in the load of the image recognition processing performed using the right image RI. As a result, it is possible to suppress degradation in the information acquisition capability of the sensor system 4001 including the right camera unit 4036 used together with the right scanner 4035 that cyclically changes the irradiating direction of the light emitted from the light source 4034.

The tenth embodiment is a mere example for facilitating understanding of the gist of the presently disclosed subject matter. The configuration according to the tenth embodiment can be appropriately modified without departing from the gist of the presently disclosed subject matter.

In the tenth embodiment, the controller 4004 is disposed in vehicle 100 on which left lamp device 4002 and right lamp device 4003 are mounted. However, the controller 4004 may be mounted on either the left lamp device 4002 or the right lamp device 4003.

In the above embodiment, the left camera unit 4026 is accommodated in the left lamp chamber 4023 of the left lamp device 4002, and the right camera unit 4036 is accommodated in the right lamp chamber 4033 of the right lamp device 4003. The merit of configuring the stereo camera system by the left camera unit 4026 and the right camera unit 4036 is that a longer base line length (distance between the optical axes of the two cameras) can be easily secured in comparison with the stereo camera system installed in the vicinity of the room mirror in the vehicle cabin. As a result, the distant visual recognition capability is enhanced. Further, since the stereo camera system is removed from the vicinity of the room mirror, the field of view of the driver is expanded.

However, the left camera unit 4026 and the right camera unit 4036 may be disposed at an appropriate position outside the vehicle cabin of the vehicle 100. By arranging the camera unit outside the vehicle cabin, a long base line length can be secured, while each camera unit is made susceptible to scanning light. However, through the processing by the controller 4004 described above, it is possible to suppress degradation in the information processing capability of the stereo camera system.

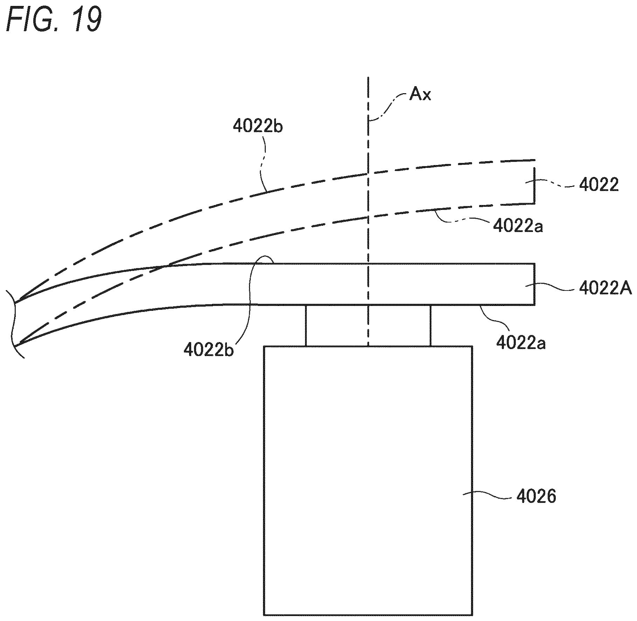

As indicated by dashed chain lines in FIG. 19, in the above embodiment, an inner surface 4022a and an outer surface 4022b of the left translucent cover 4022 are inclined with respect to the optical axis Ax of the left camera unit 4026. As indicated by solid lines in the figure, in the left translucent cover 4022A according to the modification, at least one of the inner surface 4022a and the outer surface 4022b may be a flat surface extending orthogonal to the optical axis Ax. This configuration can simplify the behavior of light incident from the outside of the left translucent cover 4022, i.e., light involved in the imaging with the left camera unit 4026. In particular, in a case where the inner surface 4022a is configured to be a flat surface, the left camera unit 4026 may be positioned so as to contact the inner surface 4022a. In this case, the influence of the light emitted from the left light source 4024 and scanned by the left scanner 4025 on the imaging with the left camera unit 4026 can be suppressed. The left camera unit 4026 may be spaced apart from the inner surface 4022a.

This description can be similarly applied to the right translucent cover 4032 and the right camera unit 4036 in the right lamp device 4003.

As described above, the term "left camera unit" means a camera unit located on the left of the right camera unit when viewed from the vehicle cabin. As used herein, the term "right camera unit" means a camera unit located on the right of the left camera unit when viewed from the vehicle cabin.

Thus, as long as a stereo camera system is established, the left camera unit 4026 need not be disposed in the left portion of the vehicle 100, and the right camera unit 4036 need not be disposed in the right portion of the vehicle 100. For example, the left camera unit 4026 may be disposed in the right rear corner portion RB of the vehicle 100 illustrated in FIG. 2. In this case, the right camera unit 4036 may be disposed in the left rear corner portion LB of the vehicle 100. Alternatively, the left camera unit 4026 may be disposed in the left rear corner portion LB of the vehicle 100. In this case, the right camera unit 4036 may be disposed in the left front corner portion LF of the vehicle 100.

The present application is based on Japanese Patent Application No. 2017-188548 filed on September 28, 2017, Japanese Patent Application No. 2017-188549 filed on September 28, 2017, Japanese Patent Application No. 2017-188550 filed on September 28, 2017, and Japanese Patent Application No. 2017-188551 filed on September 28, 2017, the entire contents of which are incorporated herein by reference.

## Claims

1. A sensor system adapted to be mounted on a vehicle, comprising:
a left lamp housing defining a part of a left lamp chamber accommodating a left lamp unit;
a right lamp housing defining a part of a right lamp chamber accommodating a right lamp unit;
a first left camera unit accommodated in the left lamp chamber and having a first angle of view;
a second left camera unit accommodated in the left lamp chamber and having a second angle of view that is wider than the first angle of view;
a first right camera unit accommodated in the right lamp chamber and having a third angle of view;
a second right camera unit accommodated in the right lamp chamber and having a fourth angle of view that is wider than the third angle of view; and
an image recognizer configured to perform image recognition based on a left image that is selected one of a first left image acquired by the first left camera unit and a second left image acquired by the second left camera unit, and based on a right image that is selected one of a first right image acquired by the first right camera unit and a second right image acquired by the second right camera unit.

2. The sensor system according to claim 1,
wherein the image recognizer is configured to select the left image and the right image based on speed of the vehicle.

3. A sensor system adapted to be mounted on a vehicle, comprising:
a left lamp housing defining a part of a left lamp chamber accommodating a left lamp unit;
a right lamp housing defining a part of a right lamp chamber accommodating a right lamp unit;
a left camera unit accommodated in the left lamp chamber and having a first angle of view;
a right camera unit accommodated in the right lamp chamber and having a second angle of view that is different from the first angle of view; and
an image recognizer configured to perform image recognition based on at least one of a left image acquired by the left camera unit and a right image acquired by the right camera unit.

4. The sensor system according to claim 3,
wherein the image recognizer is configured to select the left image and the right image based on speed of the vehicle.

5. A sensor system adapted to be mounted on a vehicle, comprising:
a first camera unit having a first optical axis oriented in a first direction;
a second camera unit having a second optical axis oriented in a second direction that is different from the first direction; and
an image recognizer configured to perform image recognition based on at least one of a first image acquired by the first camera unit and a second image acquired by the second camera unit.

6. The sensor system according to claim 5, further comprising:
a lamp housing defining a part of a lamp chamber accommodating a lamp unit,
wherein at least one of the first camera unit and the second lamp unit is accommodated in the lamp chamber.

7. A sensor system adapted to be mounted on a vehicle, comprising:
a left lamp housing defining a part of a left lamp chamber accommodating a left lamp unit;
a right lamp housing defining a part of a right lamp chamber accommodating a right lamp unit;
a left camera unit accommodated in the left lamp chamber;
a right camera unit accommodated in the right lamp chamber;
a light source configured to emit reference light; and
a detector configured to detect misalignment of at least one of an optical axis of the left camera unit and an optical axis of the right camera unit based on at least one of an image of the reference light in a left image acquired by the left camera unit and an image of the reference light in a right image acquired by the right camera unit.

8. The sensor system according to claim 7,
wherein the light source is configured to emit the reference light toward an area where an area an image of which can be captured by the left camera unit and an area an image of which can be captured by the right camera unit overlap.

9. The sensor system according to claim 7 or 8, further comprising:
a support supporting the left lamp housing and the right lamp housing, and adapted to be attached to the vehicle.

10. The sensor system according to any one of claims 7 to 9,
wherein the light source is supported at a position that is displaceable relative to the left lamp housing and the right lamp housing.

11. A sensor system adapted to be mounted on a vehicle, comprising:
a left camera unit configured to acquire a left image of at least an outside area of the vehicle;
a right camera unit configured to acquire a right image of at least the outside area of the vehicle; and
a controller capable of communicating with the left camera unit and the right camera unit, the controller configured to:
acquire first distance information corresponding to a distance to an object based on the left image and the right image;
compare the first distance information with second distance information corresponding to a distance to the object that has been acquired independently of the left camera unit and the right camera unit; and
generate calibration information for calibrating at least one of the left camera unit and the right camera unit based on a comparison result between the first distance information and the second distance information.

12. The sensor system according to claim 11, further comprising:
a sensor unit adapted to be mounted on the vehicle and configured to acquire a distance to the object,
wherein the controller is configured to communicate with the sensor unit to acquire the distance as the second distance information.

13. The sensor system according to claim 11 or 12, further comprising:
a communicator configured to acquire infrastructure information via communication,
wherein the controller is configured to acquire the infrastructure information as the second distance information.

14. A sensor system adapted to be mounted on a vehicle, comprising:
a left camera unit configured to acquire a left image of at least an outside area of the vehicle;
a right camera unit configured to acquire a right image of at least the outside area of the vehicle; and
a controller capable of communicating with the left camera unit and the right camera unit, the controller configured to:
acquire first distance information corresponding to a distance to an object based on the left image and the right image;
compare the first distance information with second distance information corresponding to a distance to the object that has been acquired independently of the left camera unit and the right camera unit; and
detect abnormality of at least one of the left camera unit and the right camera unit based on a comparison result between the first distance information and the second distance information.

15. The sensor system according to claim 14, further comprising:
a sensor unit adapted to be mounted on the vehicle and configured to acquire a distance to the object,
wherein the controller is configured to communicate with the sensor unit to acquire the distance as the second distance information.

16. The sensor system according to claim 14 or 15, further comprising:
a communicator configured to acquire infrastructure information via communication,
wherein the controller is configured to acquire the infrastructure information as the second distance information.

17. The sensor system according to any one of claims 14 to 16,
wherein the controller is configured to, in a case where the abnormality of at least one of the left camera unit and the right camera unit is detected, stop acquiring the first distance information and continue recognition processing of the object based on an image acquired by a normal camera unit.

18. A sensor system adapted to be mounted on a vehicle, comprising:
a left camera unit configured to acquire a left image of at least an outside area of the vehicle;
a right camera unit configured to acquire a right image of at least the outside area of the vehicle;
a sensor unit configured to acquire information on a position of an object situating in the outside area;
a controller capable of communicating with the left camera unit, the right camera unit, and the sensor unit, the controller configured to narrow at least one of an area of the left image to be processed that includes an image of the object and an area of the right image to be processed that includes an image of the object.

19. The sensor system according to any one of claims 11 to 18, further comprising:
a left lamp housing defining a part of a left lamp chamber accommodating a left lamp unit; and
a right lamp housing defining a part of a right lamp chamber accommodating a right lamp unit,
wherein the left camera unit is accommodated in the left lamp chamber, and the right camera unit is accommodated in the right lamp chamber.

20. A sensor system adapted to be mounted on a vehicle, comprising:
a light source configured to emit light;
a scanner configured to cyclically change an irradiating direction of the light;
a camera unit configured to cyclically acquire an image of at least an outside area of the vehicle; and
a controller configured to match a time point at which the light is irradiated to a reference direction by the scanner with a reference time point in an exposure period for acquiring the image.

21. The sensor system according to claim 20,
wherein the reference direction corresponds to an end portion of the image.

22. A sensor system adapted to be mounted on a vehicle, comprising:
a light source configured to emit light;
a scanner configured to cyclically change an irradiating direction of the light;
a camera unit configured to cyclically acquire an image of at least an outside area of the vehicle; and
a controller configured to specify a position of an image of the light included in the image based on information corresponding to the irradiating direction and information corresponding to an exposure period for acquiring the image.

23. The sensor system according to any one of claims 20 to 22,
wherein the controller is configured to detect abnormality of the scanner based on the position of the image of the light included in the image.
